(19) **Europäisches Patentamt**
**European Patent Office**
**Office européen des brevets**

(11) **EP 1 259 796 B1**

(12) **EUROPÄISCHE PATENTSCHRIFT**

(45) Veröffentlichungstag und Bekanntmachung des Hinweises auf die Patenterteilung:
**07.02.2007 Patentblatt 2007/06**

(51) Int Cl.:
**G01N 21/55** *(2006.01)*

(21) Anmeldenummer: **01919299.6**

(22) Anmeldetag: **16.02.2001**

(86) Internationale Anmeldenummer:
**PCT/EP2001/001792**

(87) Internationale Veröffentlichungsnummer:
**WO 2001/063256 (30.08.2001 Gazette 2001/35)**

(54) **SPR-SENSORSYSTEM**

SPR SENSOR SYSTEM

SYSTEME DE DETECTION PAR RESONANCE PLASMONIQUE DE SURFACE

(84) Benannte Vertragsstaaten:
**AT BE CH CY DE DK ES FI FR GB GR IE IT LI LU MC NL PT SE TR**

(30) Priorität: **22.02.2000 DE 10008006**
**20.10.2000 DE 10052165**

(43) Veröffentlichungstag der Anmeldung:
**27.11.2002 Patentblatt 2002/48**

(73) Patentinhaber: **Santhera Pharmaceuticals (Deutschland) GmbH**
**69120 Heidelberg (DE)**

(72) Erfinder:
• **DICKOPF, Stefan**
**69118 Heidelberg (DE)**

• **SCHMIDT, Kristina**
**69198 Schriesheim (DE)**
• **VETTER, Dirk**
**69120 Heidelberg (DE)**
• **BURKERT, Klaus**
**69126 Heidelberg (DE)**

(74) Vertreter: **HOFFMANN EITLE**
**Patent- und Rechtsanwälte**
**Arabellastrasse 4**
**81925 München (DE)**

(56) Entgegenhaltungen:
| | |
|---|---|
| **EP-A- 0 286 195** | **EP-A- 0 341 928** |
| **EP-A- 0 973 023** | **WO-A-95/22754** |
| **WO-A-99/30135** | **US-A- 5 313 264** |
| **US-A- 5 792 667** | **US-A- 5 858 799** |
| **US-A- 5 917 607** | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Gebiet der Erfindung

Die vorliegende Erfindung betrifft die Bereitstellung einer SPR-Sensoranordnung, die zur gleichzeitigen Erfassung einer Vielzahl von Proben befähigt ist, Verfahren zu deren Herstellung, Messanordnungen sowie Justier- und Messverfahren zum parallelen Auslesen des Sensorsystems sowie deren Verwendung bei der Wirkstoffsuche und dem Hochdurchsatz-Screening.

Hintergrund der Erfindung

Ein aktueller Ansatz zur Wirkstoffsuche besteht darin, eine große Anzahl diverser chemischer Verbindungen mittels automatisierter Syntheseapparaturen zu erzeugen. Diese Vielzahl an unterschiedlichen Strukturen wird dann auf Bindung mit Interaktionspartnern, die häufig Biomakromoleküle wie Proteine darstellen, getestet. Ein automatisiertes Verfahren, das auf diese Weise eine große Zahl von Proben sichtet, wird auch als High Throughput Screening bzw. Hochdurchsatz-Screening bezeichnet.

Aufgrund der biologischen Streuung der Messergebnisse bei Bindungsstudien ist es dabei besonders wichtig, für sämtliche Verbindungen beim Bindungstest exakt dieselben Bedingungen zu realisieren. Daher sollte der Test im Idealfall für sämtliche Proben möglichst gleichzeitig und mit derselben Lösung des zu untersuchenden Interaktionspartners durchgeführt werden, um Alterungseffekte und Temperaturdriften sowie unterschiedlich lange Bindungszeiten für die Verbindungen auszuschließen. Aufgrund der aufwendigen Verfahren zur Aufreinigung von Biomakromolekülen sollten die für den Test benötigten Mengen möglichst gering gehalten werden.

Eine besonders effektive Methode zur Durchführung von Bindungstests ist die Oberflächenplasmonenresonanz Spektroskopie (abgekürzt SPR, von englisch: Surface Plasmon Resonance). Gegenüber Fluoreszenz- und Chemilumineszenz-Verfahren werden bei SPR keine farbstoffmarkierten Proben und auch keine Antikörper für das zu testende Protein benötigt. Bei SPR wird ein Interaktionspartner (z.B. Ligand) auf einer Metalloberfläche immobilisiert und dessen Bindung an einen anderen Interaktionspartner (z.B. Rezeptor) nachgewiesen. Dazu wird ein optischer Träger (meist ein Prisma) mit Gold beschichtet und der Intensitätsabfall des intern im Prisma reflektierten Lichtes als Funktion des eingestellten Winkels oder als Funktion der Wellenlänge detektiert (Kretschmann-Anordnung). Nachgewiesen wird letztendlich eine Brechungsindexänderung des Mediums auf der der Goldschicht gegenüberliegenden Seite, die auftritt, wenn Moleküle an die Oberfläche binden.

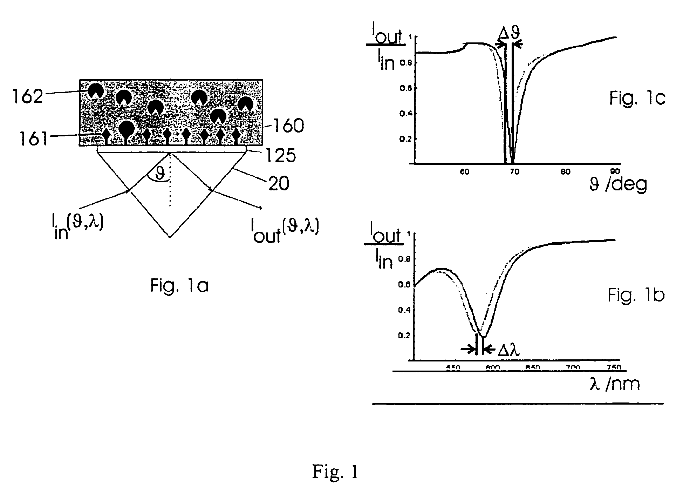

Fig. 1a zeigt schematisch die sogenannte Kretschmann-Geometrie, die vielfach zur Messung des SPR-Effektes benutzt wird. Hier wird eine auf einem Prisma 20 befindliche dünne Goldschicht 125 mit der zu untersuchenden Lösung 160 in benetzenden Kontakt gebracht. Gemessen wird üblicherweise die Intensität des intern an den Grenzschichten Glas/Gold/Flüssigkeit reflektierten Lichtes entweder als Funktion des Einfallswinkels $\vartheta$ oder als Funktion der Wellenlänge. Bei geeigneter Resonanzbedingung nimmt die Intensität des reflektierten Lichtes stark ab. Die Energie des Lichtes wird dann umgewandelt in Elektronen-Ladungsdichtewellen (Plasmonen) entlang der Grenzschicht Gold/Flüssigkeit. Die Resonanzbedingung lautet näherungsweise (aus Kapitel 4, "Surface Plasmon Resonance" in G. Ramsay, Commercial Biosensors, John Wiley & Sons (1998):

$$\frac{2\pi}{\lambda} n_{prism} \sin\vartheta \approx \frac{2\pi}{\lambda} \sqrt{\frac{n_{metal}^2(\lambda) n_{sample}^2}{n_{metal}^2(\lambda) + n_{sample}^2}}$$

Dabei ist $n_{prism}$ der Brechungsindex des Prismas, $n_{metal}$ der komplexe Brechungsindex der Metallschicht und $n_{sample}$ derjenige der Probe. $\vartheta$ und $\lambda$ sind Einfallswinkel und Wellenlänge des eingestrahlten Lichtes. Die Wellenlängenspektren (Fig. 1b) beziehungsweise die Winkelspektren (Fig. 1c) zeigen eine Abnahme der Intensität in dem Wellenlängenbereich beziehungsweise in dem Winkelbereich, bei dem die oben aufgeführte Resonanzbedingung erfüllt ist. Durch Veränderung des Brechungsindex in der Lösung $n_{sample}$ wird die Resonanzbedingung verändert, wodurch sich die Resonanzkurven verschieben. Der Wert der Verschiebung ist für kleine Veränderungen im Brechungsindex linear zu dieser Änderung (für größere Änderungen kann nötigenfalls eine Kalibrierung erfolgen). Da das reflektierte Licht nur wenige 100 nm in die Flüssigkeit eindringt, wird lokal in diesem Bereich die Brechungsindexänderung gemessen. Wenn die in der Lösung befindlichen Zielmoleküle (z.B. Proteine) 162 an geeignete Interaktionspartner 161, die auf der Oberfläche immobilisiert sind, binden (d.h. sich ein Assoziations-Dissoziationsgleichgewicht einstellt), erhöht sich lokal die Konzentration des Zielmoleküls an der Oberfläche, die dann als Brechungsindexänderung nachgewiesen werden kann.

WO 99/60382 beschreibt einen SPR-Sensor, der zur gleichzeitigen Erfassung einer Vielzahl von Proben befähigt ist. Eine Messanordnung zum parallelen Auslesen eines solchen SPR-Sensorsystems wird in WO 00/31515 offenbart. Hierbei wird zur parallelen Durchführung der SPR-Messungen mit einer Vielzahl von Proben eine Apparatur vorgeschlagen, die auf dem Prinzip der Wellenlängenmessung beruht, aber kein Prisma verwendet. Dabei wird ein Array aus "Sensorfingern" benutzt, der auf jedem Sensorfinger eine andere Substanz tragen kann. Dieser Array kann in einer Mikrotiterplatte (MTP) beschichtet und gemessen werden, d.h. jeder Sensorfinger kann in einer anderen Lösung gemessen werden. Der Kontrast zwischen den Sensorfeldern und den Zwischenbereichen wird durch die Geometrie der Wellenleiter vorgegeben. Hier tritt nur an den Bereichen Licht durch den Array, an denen ein Sensorfeld angebracht ist, was zu einem hohen Kontrast führt. Nachteilig ist das aufwendige Herstellungsverfahren der Sensorfinger und ihre Anfälligkeit gegen mechanische Berührung, sowie dem relativ hohen Probenverbrauch bei der Beschichtung.

WO 98/34098 zeigt Probenfelder auf einer SPR-fähigen Goldschicht, die auf ein Prisma aufgebracht ist. Der Kontrast wird durch Einstellen geeigneter Resonanzbedingungen bestimmt. Nachteilig ist, dass dadurch die Anforderungen an die Homogenität der Oberflächen sehr hoch sind, weil nur der Teil der Sensorfläche in der Abbildung unter SPR-Bedingungen einen Kontrast zeigt, der die selben Schichtdicken aufweist.

Ein anderes SPR-Imaging-System wird in B. P. Nelson et al., Anal. Chem. 1999, 71, S.3928-3934 beschrieben. Hier wird eine auf eine unstrukturierte Glasplatte aufgebrachte, einheitliche Goldoberfläche mit einem Muster versehen, das ein Array aus 500 x 500 $\mu$m großen mit DNS bedeckten Feldern umfasst, wobei die DNS-Felder durch Felder getrennt sind, die mit Alkanethiol bedeckt sind, welches eine Proteinadsorption außerhalb der DNS-Felder verhindern soll. Die DNS-Felder werden dann mit einer Protein-Probe in Kontakt gebracht und eine Abbildung der Goldoberfläche unter dem SPR-Winkel auf einen CCD-Chip wird vor und nach dem Inkontaktbringen erzeugt. Hierbei ist die Unterscheidbarkeit der DNS-Felder von den übrigen Bereichen abhängig vom Molekülgewicht der immobilisierten chemischen oder biologischen Moleküle. Hierbei sinkt der Kontrast mit geringer werdendem Molekulargewicht. Weiterhin nachteilig ist der relativ große Pixelbereich, dem ein DNS-Feld auf der CCD-Kamera zugeordnet werden muss, um einen ausreichenden Kontrast zu gewährleisten. Diese Anforderungen stehen einer universell verwendbaren und miniaturisierten SPR-Sensoranordnung entgegen. Der Oberbegriff des Patentanspruchs 1 ist aus dieser Druckschrift bekannt.

In WO 90/05305 wird eine austauschbare Sensoreinheit zur Verwendung in einem optischen Biosensorsystem (WO 90/05295) beschrieben. Eine Zuordnung der Probenfelder auf der Sensoreinheit erfolgt durch das Inkontaktbringen mit einer Blockeinheit zur Handhabung von Flüssigkeiten, z.B. dem Durchflusssystem, wie sie in WO90/05295 offenbart ist. Durch das Durchflusssystem ist die Anordnung der Sensoroberflächen in eindimensionaler Richtung vorgegeben (eindimensionaler Array).

Aus US-5,917,607 ist ein SPR-Sensor bekannt, bei welchem auf der flachen Seite eines halbzylindrischen Prismas eine Reihe von getrennten Metallflächen vorgesehen ist, die mit Proben in Berührung gebracht werden, wobei über das Prisma eine Bestrahlung der Metallflächen erfolgt.

Aus WO 95/22754 ist eine SPR-Meßanordnung bekannt, bei welcher mehrere Reaktionsgefäße in einer Struktur vorgesehen sind. Der jeweilige Boden der Gefäße weist eine SPR-fähige Schicht auf und ist darunter prismenförmig ausgebildet, um Strahlung parallel einkoppeln zu können.

Aus WO 99/30135 ist eine SPR-Meßanordnung bekannt, bei welcher ein nxn Array verwendet wird. Darauf befinden sich Sensorbereiche, die durch Deiche getrennt sind. Die Deiche umgeben die aktiven Sensorbereiche, und können aus photoabsorbierendem Material bestehen, um ein Ausbreiten des Resonanzphänomens von einem Bereich in den nächsten zu verhindern. Die Deiche können ebenso hydrophob sein.

US-5,313,264 offenbart eine SPR-Sensorplatte mit einer Metallschicht, die gegen eine geätzte Silizium Schicht gedrückt wird, um vier schlitzförmige Spalten zu bilden, die dann als Messkanäle für eine Flüssigkeit dienen.

## Aufgabe der Erfindung

Der vorliegenden Erfindung liegt die Aufgabe zugrunde, eine verbesserte SPR-Sensoranordnung zur Verfügung zu stellen.

## Zusammenfassung der Erfindung

Diese Aufgabe wird durch die kennzeichnenden Merkmale des Patentanspruchs 1 bzw. die Gegenstände der nebengeordneten Ansprüche gelöst. Vorteilhafte Ausgestaltungen sind Gegenstand der abhängigen Ansprüche.

Erfindungsgemäß sind Trennmittel zur Strukturierung der SPR-Sensoranordnung vorgesehen, so dass eine zweidimensionale Probenanordnung ermöglicht wird. Eine Vielzahl von Proben wird in einem zweidimensionalen Sensorarray derart angeordnet, dass die Geometrie und Anzahl der Sensorfelder bzw. Sensorflächen, sowie der Kontrast zwischen Sensorfeldern und deren Zwischenbereiche durch Trennmittel auf dem Sensorsystem bestimmt werden und die Flächen der Sensorfelder parallel zu der Koordinatenebene des Probenarrays liegen. Nachdem die Trennmittel einen Kontrast außerhalb einer Oberflächenplasmonen-Resonanz in den SPR-Sensorflächen schaffen, kann die Positionierung und Justierung einer Sensoranordnung in einer Messanordnung ohne weiteres vorgenommen werden, indem beinahe beliebige Strahlung zur Anordnung geleitet wird, und dann eine Einstellung aufgrund des zwischen den SPR-Sensorflächen und Trennmitteln hervorgerufenen Kontrasts ermöglicht wird, da dadurch diese Bereiche in einer Abbildung leicht voneinander unterschieden werden können, bzw, die einzelnen SPR-Sensorflächen leicht voneinander unterschieden werden können.

In anderen Worten, wohingegen beim Stand der Technik nach B. P. Nelson et al. (siehe oben) die veränderliche physikalische Bedingung (z.B. der Einfallswinkel der Strahlung auf die Sensoranordnung oder die Wellenlänge der Strahlung) sehr genau auf die Resonanz geregelt werden musste, um die auszumessenden Bereiche in einer Abbildung voneinander zu unterscheiden, da dort außerhalb der Resonanz eine gleichartige Reflektion stattfand von den mit DNS und den mit Alkanethiol bedeckten Bereichen auf dem Gold, kann bei der vorliegenden Erfindung mit Strahlung unter einer beinahe beliebigen physikalischen Bedingung (beliebiger Winkel oder beliebige Wellenlänge) gemessen werden, und der vorhandene Kontrast ermöglicht eine Unterscheidung der Bereiche. Ebenfalls kann das Molekulargewicht der zu immobilisierenden chemischen Verbindung beliebig gewählt sein. Somit können hierbei auch kleine organische Moleküle eingesetzt werden (kleiner 5000, vorzugsweise kleiner 1000, noch besser kleiner 500 Dalton).

Obwohl es möglich ist, dass die Reflektion im Bereich der Trennmittel außerhalb einer Resonanz in den SPR-Sensorflächen kleiner ist als im Bereich der SPR-Sensorflächen, sind die SPR-Sensorflächen und die Trennmittel vorzugsweise so beschaffen, dass die Intensität der von den Trennmitteln reflektierten Strahlung geringer als die Intensität der von den SPR-Sensorflächen reflektierten Strahlung ist, d.h. zumindest außerhalb der Resonanz in den SPR-Sensorflächen. Es ist möglich, dass die Absorption im Bereich der Resonanz so stark ist, dass die Intensität der von den SPR-Sensorflächen reflektierten Strahlung bei Resonanz in diesen SPR-Sensorflächen kleiner wird als die Intensität der von den Trennmitteln reflektierten Strahlung. Dies führt jedoch im Resonanzbereich nur zu einer Kontrastinversion, so dass eine Unterscheidung der Bereiche in der Abbildung weiterhin ohne weiteres möglich ist. Das Reflektionsspektrum der SPR-Sensorflächen schneidet die (vorzugsweise konstante) Reflektionsintensität der Trennmittel punktuell in zwei Stellen, so dass nur an genau diesen zwei Stellen kein Kontrast auftritt, was offensichtlich vernachlässigbar ist und zweifellos einen großen Fortschritt gegenüber der Anordnung nach B. P. Nelson et al. darstellt. Allerdings wird bei der vorliegenden Erfindung bevorzugt, dass die Trennmittel und SPR-Sensorflächen so beschaffen sind, dass die Intensität der von den SPR-Sensorflächen reflektierten Strahlung immer größer ist als die Intensität der von den Trennmitteln reflektierten Strahlung, d.h. auch im Bereich der Resonanz in den SPR-Sensorflächen.

In einer bevorzugten Ausführungsform werden die Trennmittel direkt auf das Sensorsystem aufgebracht. Die Verwirklichung der Trennmittel und Sensorflächen kann auf beliebige geeignete Weise erfolgen. So besteht eine Möglichkeit darin, als Trennmittel eine strahlungsabsorbierende Substanz auf das Sensorsubstrat aufzubringen, während als SPR-Sensorfläche ein SPR-geeignetes Material aufgebracht wird, z.B. ein Metall, vorzugsweise Gold. Es ist möglich als Trennmittel ein Material einzusetzen, das einen gleichen oder größeren Brechungsindex (vorzugsweise höchstens um 0.1 größer) als das Substratmaterial hat, so dass Strahlung aus dem Substrat zwar in die Trennmittel hinein gebrochen wird, möglichst aber nicht zurück in das Substrat gebrochen wird. Dies lässt sich auch mit dem Einsatz von absorbierendem Material verbinden, indem nämlich in die Trennmittel mit höherem Brechungsindex zusätzlich strahlungsabsorbierende Substanzen eingebracht werden, wie z.B. Kohlenstoff oder ein Farbstoff. Vorzugsweise ist die Höhe und Breite einer aus dem Kontrastbildungsmaterial bestehenden Schicht so bestimmt, dass ein aus dem Substrat in die Schicht gebrochener Strahl höchstens zwei mal an der von der Substratoberfläche abgewandten Seite der Schicht zum Substart zurückreflektiert wird.

Geeignete Materialen für die Trennmittel sind absorbierende Metall- oder Halbleiterschichten oder Polymere (z.B. Photolack, Silizium).

Vorzugsweise gewährleisten die Trennmittel zudem, dass keine Kontamination zwischen den Sensorfeldern bzw. SPR-Sensorflächen stattfinden kann. Dies wird erreicht indem die Trennmittel gegenüber den SPR-Sensorflächen in der zum Substrat senkrechten Richtung Erhebungen bilden, vorzugsweise mit einer Höhendifferenz zwischen 0.01 mm und 5 mm. Es ist vorteilhaft, wenn die Flanken bzw. Oberflächen der Trennmittel, welche hierbei Gefäße zur Aufnahme einer Probenflüssigkeit bilden, hydrophob bzw. hydrophobisiert sind, so dass eine wässrige Lösung besonders gut gehalten wird, ohne die Möglichkeit einer Kreuzkontamination mit anderen SPR-Sensorflächen.

Gemäß einer Ausführung besteht die SPR-Sensoranordnung aus einem Prisma, das mit einer SPR-fähigen Metallschicht und gegebenenfalls mit einer haftvermittelnden Schicht versehen wird, sowie mit den Trennmitteln versehen ist.

In einer anderen Ausführung ist die SPR-Sensoranordnung mehrteilig bestehend aus einer probentragenden, mit Trennmitteln und SPR-Sensorflächen versehenen Sensoranordnung und einer strahlenführenden Komponente. Die strahlenführende Komponente besteht vorzugsweise aus einem Prisma. Zusätzlich kann zwischen der strahlenführenden Komponente und der probentragenden Sensoreinheit ein optischer Vermittler zur geeigneten Anpassung des Brechungsindex vorhanden sein.

Kleine Inhomogenitäten der Goldschichtdicke (bis zu 2-3 nm) sind in diesen Anordnungen akzeptabel, da das Bild der Sensorfläche unabhängig von der SPR-Resonanz sichtbar ist.

Weiterhin betrifft die Erfindung eine Messanordnung, die die SPR-Sensoranordnung enthält, zur parallelen Messung einer Vielzahl von vorzugsweise unterschiedlichen Proben, die kostengünstig in vielen Kopien hergestellt werden kann und damit auch für den einmaligen Gebrauch geeignet ist. Somit kann der Substanzverbrauch zur Beschichtung eines Sensorfeldes gegenüber Sensorsystemen nach dem Stand der Technik verringert werden.

Um eine Vielzahl an unterschiedlichen Proben mit der SPR-Methode auf Interaktion zu untersuchen, ist es vorteilhaft, diese auf einem Träger in zweidimensionaler Weise (zweidimensionaler Array) anzuordnen und einer parallelen Messung, z.B. mit Hilfe einer CCD-Kamera, zu unterziehen (Imaging). Bei der Auswertung des mit einem solchen ortsauflösenden Detektor aufgezeichneten Bildes ist es von enormem Vorteil, dass die Erfindung einen starken Hell-Dunkel Kontrast zwischen den mit Proben belegten Bereichen (Sensorfeldern) und den Zwischenbereichen erzeugt, um eine scharfe Abbildung der Sensorfelder zu erreichen, was eine verbesserte Zuordnung der physikalischen Ortskoordinaten der Proben auf dem Träger mit den Koordinaten im Bild ermöglicht.

Im Stand der Technik wurde dazu der SPR-Effekt selbst benutzt. Der Kontrast wird dabei allein durch Einstellen geeigneter Resonanzbedingungen erzeugt, z.B. durch Einstellen eines geeigneten Winkels bei winkelabhängiger Messung. Da auch in Resonanz das Licht nicht vollständig in Oberflächenplasmonen umgewandelt wird, ist diese Methode der Kontrasterzeugung gegenüber der vorliegenden Erfindung nachteilig (10-20% des Lichtes werden auch bei Resonanz reflektiert). Hierbei werden ebenfalls hohe Ansprüche an die Homogenität der Goldschichtdicke gestellt. Bessere Resultate kann man durch strukturierte, absorbierende Schichten, d.h. die Trennmittel der vorliegenden Erfindung erhalten.

Allen Ansätzen des eingangs beschriebenen Standes der Technik zur parallelen Erfassung einer Vielzahl von Proben ist gemein, dass der Kontrast zwischen den mit Proben belegten Feldern und den Zwischenbereichen nicht durch kontrasterzeugende Trennmittel bestimmt wird, wie sie von der vorliegenden Erfindung gelehrt werden.

Kurze Beschreibung der Zeichnungen

Die Erfindung soll nachstehend anhand schematischer Ausführungsbeispiele näher erläutert werden. Es zeigen:

Fig.1　　eine typische Kretschmann-Geometrie,

Fig.2　　Ausführungsformen eines prinzipiellen Aufbaus des erfindungsgemäßen Sensorsystems,

Fig.3　　die Zuordnung eines einzelnen SPR-fähigen Sensorelements zu den Pixeln eines CCD-Arrays,

Fig.4　　die prinzipiellen Möglichkeiten der Eliminierung des Lichtes an den nicht gewünschten Stellen der Sensorsystems,

Fig.5　　eine Strukturkante zur Führung des Flüssigkeits-Transferpins,

Fig.6　　ein Sensorsystem mit Abstandhaltern oder Kavitäten,

Fig.7　　eine Prinzip-Skizze der Scheimpflug-Methode zur scharfen Abbildung des Sensorfeldes auf einen Detektor,

Fig.8　　eine Strahlengang-Anordnung mit telezentrischer Abbildung und paralleler Beleuchtung zur Vermeidung von Abbildungsverfälschungen,

Fig.9　　einen Ausschnitt aus dem Bild eines Sensorsystems, und

Fig.10　　ein aus 5 Pixeln erhaltenes Spektrum.

Ausführliche Beschreibung von Ausführungen der Erfindung

Um eine Vielzahl von Proben untersuchen zu können, wird in dem erfindungsgemäßen Sensor die Oberfläche der probentragenden Sensoreinheit in Felder unterteilt bzw. strukturiert und auf jedem Feld bzw. jeder Sensorfläche vorzugsweise eine andere Probe immobilisiert. Jedes dieser Felder wird anschließend räumlich getrennt von den anderen auf einem Detektor nachgewiesen.

Im Rahmen der Erfindung gelangt vorteilhaft eine probentragende Sensoranordnung zum Einsatz, die eine Probenbelegung mit Hilfe von kommerziell erhältlichen Spotting-Robotern erhält. Bei der Spotting-Technik werden die Proben mittels Transferpins oder Mehrfachpipettierern von einer Mikrotiterplatte auf die Sensorplatte transferiert. Dazu werden die Transferpins in die Probenflüssigkeit getaucht - der an der Spitze des Transferpins haftende Tropfen mit Probeflüssigkeit wird dann auf einem Sensorfeld des Biochips abgesetzt. Durch Variieren der Pingrösse können unterschiedliche Probenvolumina transferiert werden.

Der Substanzverbrauch zur Beschichtung eines Sensorfeldes liegt bei den Spottingtechniken im Nanoliterbereich - verglichen mit ca. 5μl für einen wie in WO 99/60382 beschriebenen Sensorfinger im 1536er MTP-Format.

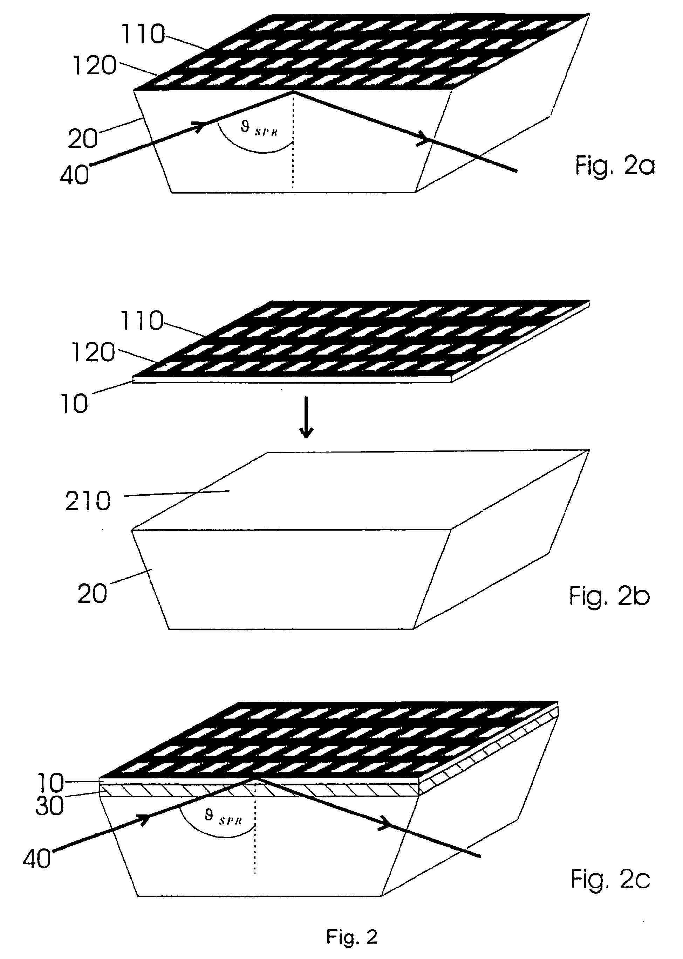

Fig. 2 zeigt den prinzipiellen Aufbau des erfindungsgemäßen Sensorsystems.

Um eine kostengünstige Strukturierung zu ermöglichen, ist es vorteilhaft, nicht die strahlenführende Komponente 20 (vorzugsweise ein Prisma) direkt zu strukturieren (Fig. 2a), sondern stattdessen eine probentragende Sensoreinheit 10 einzufügen, die dann auf das Prisma gelegt wird (Fig. 2b und c). Die Sensoreinheit besteht aus einem planaren, optisch durchlässigen Träger, bevorzugt einer strukturierbaren Glasplatte (die im folgenden auch als Biochip bezeichnet wird). Die Platte kann jedoch auch aus einem geeigneten Kunststoff bestehen.

Außerdem ist es möglich, den Biochip getrennt vom optischen Strahlengang zu betrachten, wodurch ein Gerät (Reader) bereitgestellt werden kann, bei dem die optische Detektionsstrecke bereits justiert ist, und der Biochip zum Auslesen einfach auf das Prisma gelegt wird.

Auf diesen Biochip werden Trennmittel 110, z.B. in Form einer strukturierbaren absorbierenden Schicht (Lack, gebondetes Si, Polymer o.ä.) aufgebracht, um die Sensorfelder 120 zu erzeugen.

Das Licht tritt senkrecht in das linke Seitenfenster des Prismas ein. Damit das unter SPR-Bedingungen eingestrahlte Licht 40 (d.h. dass der Einfallswinkel $\vartheta_{SPR}$ oberhalb der Totalreflexion liegt) nicht an der Grenzfläche der Prismenoberfläche 210 zum Luftspalt vor dem Biochip 10 reflektiert wird, (wie bei SPR-Messungen üblich) wird dieser mit Hilfe von Indexanpassungsflüssigkeit bzw. Indexflüssigkeit 30 in Kontakt mit dem Prisma 20 gebracht. Deshalb dringt das Licht durch die Indexflüssigkeit 30 und in die darüber befindliche Glasplatte ein und wird erst an der mit Gold beschichteten Oberseite reflektiert. Ein Beispiel für eine Indexflüssigkeit ist Ölsäure bzw. eine Ölsäure enthaltende Mischung.

Für den Fall, dass die Probenbelegung auf den Sensorfeldern durch die Spotting-Technik erfolgt, ist es notwendig, dass die Flüssigkeit in Tropfenform auf dem Sensorfeld fixiert wird, um ein Übersprechen zum Nachbarfeld zu vermeiden. Dazu können Kavitäten auf der Platte erzeugt werden, die den Kavitäten einer Mikrooder Nanotiterplatte ähnlich sind.

Es sei bemerkt, dass die Fig. 2 nur ein Beispiel einer Anordnung von SPR-Sensorflächen zeigt. Die gezeigten Sensorflächen müssen nicht rechteckig sein, sondern können eine beliebige Form haben. So ist es in manchen Anwendungen vorteilhaft, wenn die Sensorflächen eine runde oder ovale Form haben. Auch müssen nicht alle Sensorflächen des Rasters die gleiche Form und/oder Größe haben, obwohl dies vorzuziehen ist.

Es sei auch bemerkt, dass die Abbildung der Fig. 2 nur schematisch ist. Bei realen Sensoranordnungen nach der Erfindung ist es möglich Dichten an Sensorflächen von mehr als 10000 Sensorflächen pro cm$^2$ zu erreichen, was sehr vorteilhaft ist im Hinblick auf schnelle und effiziente Messungen, bei welchen eine große Zahl von Proben gleichzeitig gemessen werden kann, unter Einsatz von sehr kleinen Probenvolumina. Die Sensorflächendichte sollte dabei mindestens 100, besser 1000 Sensorflächen pro cm$^2$ betragen. Dies ist ein weiterer Vorteil der vorliegenden Erfindung gegenüber dem Artikel von B. P. Nelson et al., da dort nur sehr große Sensorflächen von 500 x 500 $\mu$m möglich waren.

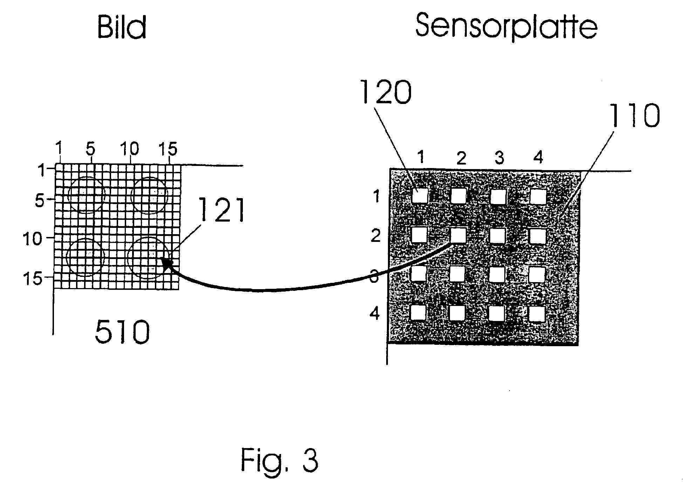

Nun soll die Lichtintensität von jedem goldbeschichteten Sensorfeld 120 optisch getrennt von den Nachbarfeldern nachgewiesen werden. Dies wird dadurch realisiert, dass die Sensoroberfläche auf einen ortsauflösenden Detektor abgebildet wird. Damit auf dem detektierten Bild 510 (Fig. 3) die Sensorfelder mit gutem Kontrast getrennt sichtbar werden, sollte das an den Zwischenbereichen 110 ankommende Licht in möglichst starkem Maß absorbiert, weggestreut oder in eine andere als der Detektionsrichtung weggeleitet werden. Erst dieser Kontrast zwischen Sensorbereich und Berandung erlaubt es, eine Zuordnung von Pixelbereichen 121 im Bild 510 zu einem Sensorfeld 120 zu definieren. Über die Pixel eines Bereiches im Bild wird während der Datenaufnahme summiert, so dass bei guter Absorption der Zwischenbereiche 110 auch die Spektren für die Sensorfelder 120 aussagekräftiger werden, weil der Untergrund, der ja kein SPR-Signal trägt, minimiert wird.

Eine Justierung des Systems ist also auf einfache Weise möglich, da zunächst die Sensoranordnung (mit oder ohne Proben auf den Sensorflächen) in das Messsystem eingelegt wird, und dann eine Abbildung mit Strahlung einer beliebigen Einstrahlungsbedingung (d.h. beliebigen Winkels oder beliebiger Wellenlänge - siehe auch Fig. 1) gemacht wird, wobei der Kontrast eine Unterscheidung der einzelnen Sensorflächen voneinander, bzw. der Sensorflächen von den Trennmitteln gestattet.

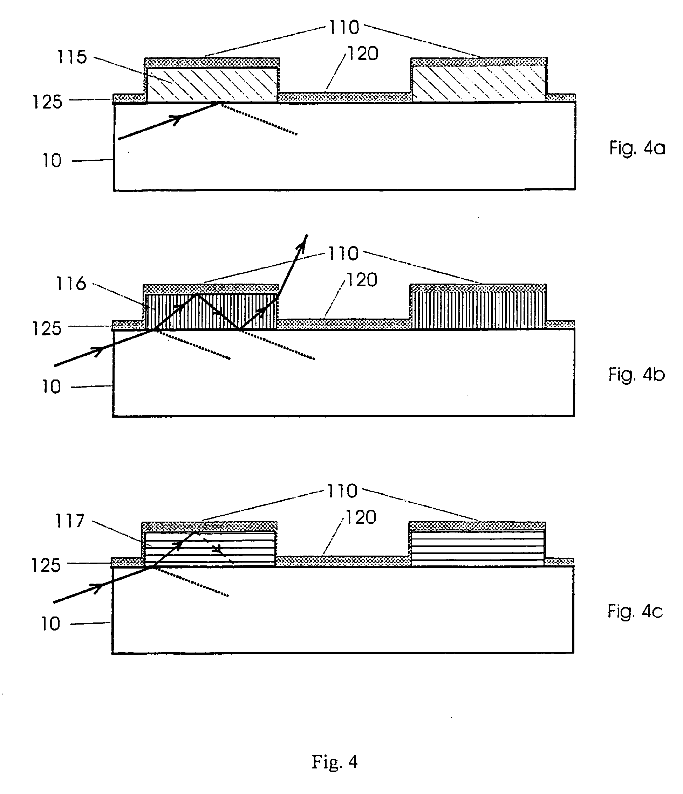

Fig. 4 zeigt einige prinzipielle Möglichkeiten der Eliminierung des Lichtes an den nicht gewünschten Stellen.

In Fig. 4a wird eine strukturierbare, absorbierende Schicht 115 (Lack, gebondetes Si, Polymer o.ä.) auf die Glasplatte 10 aufgebracht, um die Sensorfelder 120 zu erzeugen. Diese Schicht ist vorzugsweise nicht SPR-fähig. Danach erfolgt die Beschichtung mit Gold 125 (oder jedem anderen SPR-geeigneten Material), so dass das Licht an den Stellen 110, an denen die absorbierende Schicht befindlich ist, nicht bis zum Gold vordringen kann. Das Gold bzw. allgemein ein Metall wird mittels bekannter Abscheidetechniken aufgebracht, z.B.

Aufdampfen oder Sputtern. Die Absorption erfolgt hier an der Grenzfläche zur strukturierten Schicht hin. Es ist vorteilhaft, die Goldschicht als letztes aufzubringen, da sie so am wenigsten mechanischer Beanspruchung ausgesetzt wird. Mit dieser Methode ist allerdings keine vollständige Absorption des Lichtes zu erzielen, da immer ein Teil des Lichtes an der Grenzfläche reflektiert wird.

Eine zweite Möglichkeit das Licht zu eliminieren ist in Fig. 4b dargestellt. Hier wird ein Polymer 116 mit einem gleichen oder etwas höheren Brechungsindex als der des Glasträgers 10 benutzt (z.B. 0.08). Allgemein ist ein Brechungsindexunterschied von 0 bis 0.1 geeignet. Dadurch kann das Licht mit wenigen Prozent Reflexionsverlust in diesen Polymerbereich 116 eindringen. Auf der Seite zum Gold hin wird das Licht zwar überwiegend reflektiert, kann aber dann nur sehr uneffektiv zurück in den Glasträger 10 eindringen, weil der Brechungsindex höher und der Winkel nahe der Totalreflexion ist. Nach 1-2 Reflexionen innerhalb der Polymerschicht tritt das Licht auf einer Seitenkante der strukturierten Schicht aus, da der Winkel hier weit unterhalb des Totalreflexionswinkels ist. Die Polymerschicht wirkt in dieser Anordnung als Licht(ab)leiter. Wichtig bei der Funktion dieses Prinzips ist jedoch, dass die Schicht 116 vorzugsweise so dick dimensioniert ist, dass nicht mehr als 1-2 Reflexionen zur Glasplatte 10 auftreten, da hier immer wieder ein Teil des Lichtes zurück in das Glas eindringt.

Eine weitere Möglichkeit zur Eliminierung des Lichtes besteht in einer Kombination der in Fig. 4a und Fig. 4b dargestellten Möglichkeiten (Fig. 4c). Hier wird ebenfalls ein Polymer 117 aufstrukturiert, das einen Brechungsindex leicht oberhalb des Glasträgers 10 (möglichst nur wenige Hundertstel) aufweist. Daher dringt das Licht bis auf wenige Promille in diese Schicht ein. Zusätzlich befinden sich bei dieser Methode in dem Polymermaterial lichtabsorbierende Substanzen, z.B. Kohlenstoff bzw. Graphit. Durch diese Materialwahl erfährt das Licht einen Wegleitungsmechanismus (ähnlich dem in Fig. 4b), verstärkt jedoch um die Absorption durch die Substanzen auf dem Lichtweg durch das Polymer. Dadurch erhält man eine deutliche Verbesserung der Lichtelimination, verglichen mit den beiden oben aufgeführten Methoden.

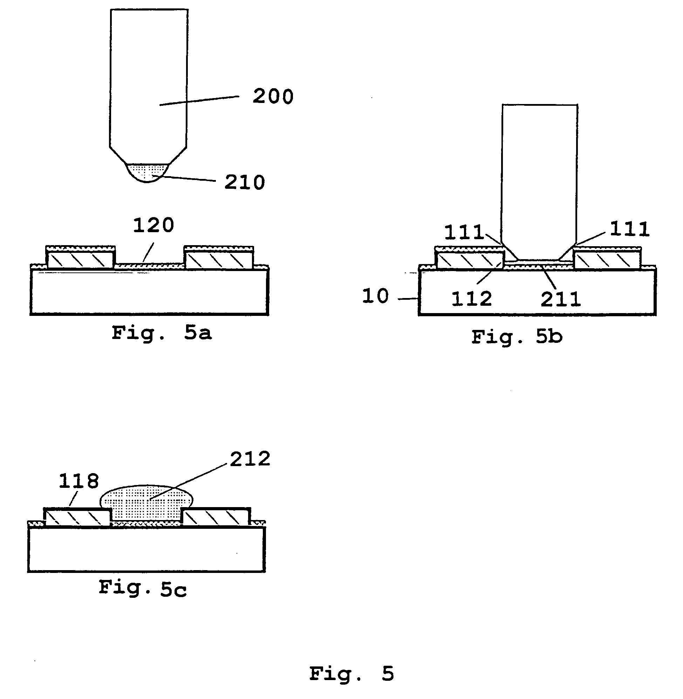

Die Strukturierung der Schicht hat außer der Lichtelimination vorzugsweise noch weitere Funktionen beim Aufbringen der Probenflüssigkeit. Die Kante 111 der Polymerstruktur dient der Führung des Flüssigkeits-Transferpins 200, der den Flüssigkeitstropfen 210 auf dem Sensorfeld 120 absetzt (Fig. 5a und 5b).

Eine weitere Eigenschaft des aufstrukturierten Gitters bzw. Rasters ist die Oberflächenbeschaffenheit. Die glatte hydrophobe Oberfläche der Seiten 112 dient zusätzlich als Fixierung des Flüssigkeitstropfens 211 und bewahrt vor Übersprechen der Lösung zum Nachbarfeld. Dieser Effekt kann verstärkt werden, indem die strukturierenden Bereiche nicht mit Gold, sondern z.B. mit Teflon beschichtet werden, und damit zusätzliche hydrophobe Flächen 118 geschaffen werden (Fig. 5c), die das Halten von größeren Flüssigkeitsmengen 212 als dem Volumen der Vertiefung ermöglicht. Eine weitere Möglichkeit, zusätzliche hydrophobe Flächen zu schaffen, besteht darin, die Goldschicht chemisch zu hydrophobisieren. Dies kann beispielsweise dadurch erreicht werden, dass diese Bereiche der Goldschicht, die nicht die Sensoroberfläche bilden, mit Alkylthiolen beschichtet werden, die eine dichte selbst-assemblierende Monoschicht ausbilden.

Vorzugsweise sind die Sensorfelder in einem ganzzahligen Bruchteil eines beliebigen Mikrotiter-Formats anordenbar, um den parallelen Probentransport von einer Mikrotiterplatte mit einem Transfertool zur Sensorplatte zu erleichtern. Durch die Bruchteilbildung sind Sensorabstände bis in den Bereich von einigen 10 $\mu$m realisierbar. Die Form der Sensorfelder kann quadratisch, rechteckig oder rund sein, wobei die Ausdehnung in Richtung der Lichtausbreitung noch so groß sein sollte, dass die Ausbildung von Plasmonenwellen nicht eingeschränkt wird (ebenfalls einige 10 $\mu$m). Der bevorzugte Flächenbereich eines Sensorfeldes liegt bei $10^2$ bis $10^6$ $\mu m^2$.

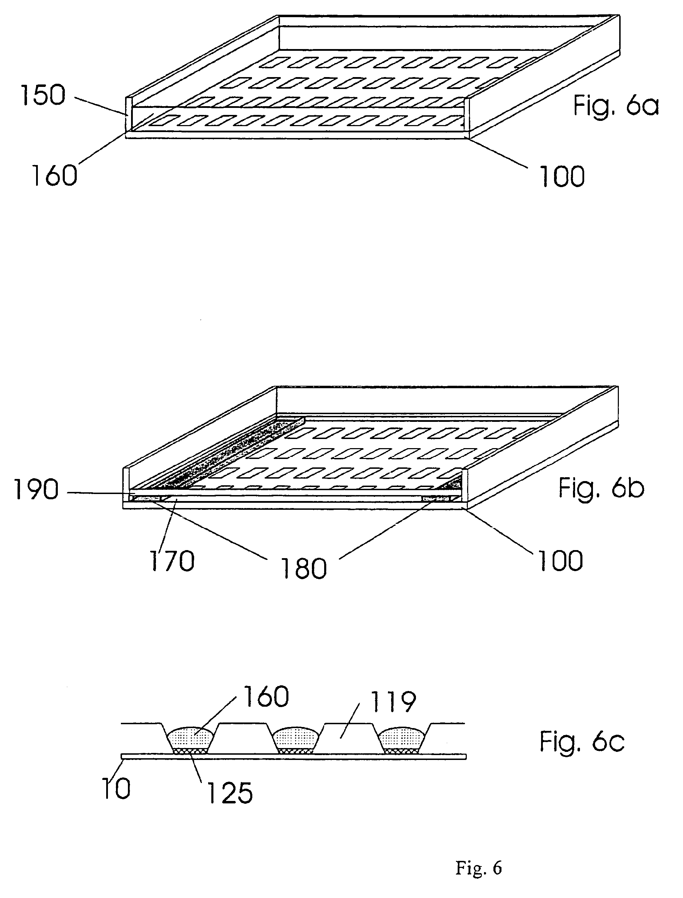

Zur Messung wird das mit einem Interaktionspartner beschichtete SPR-Sensorfeld mit der zu charakterisierenden Probe (z.B. Proteinlösung) in Kontakt gebracht. Dazu ist es vorteilhaft, eine Küvettenumrandung 150 um den Biochip anzubringen (Fig. 6a), die ein Einfüllen von Probenflüssigkeit 160 ermöglicht und außerdem vor der Kontamination mit Indexflüssigkeit schützt. Diese sogenannte "One-Well"-Konstruktion der Sensorplatte ermöglicht außerdem, sämtliche Schritte für die Präparation der Goldschichten (Reinigung, Vorbeschichtung etc.) parallel durchzuführen.

Zur Messung genügt es, die SPR-fähigen Metallbereiche mit der Probe vollständig zu benetzen. Daher kann ein Kapillarspalt 170 über der Sensorplatte 100 mit Hilfe von Abstandshaltern 180 und einer Glasplatte 190 erzeugt werden, um die erforderliche Flüssigkeitsmenge zu minimieren (Fig. 6b). Die Befüllung des Kapillarspaltes sollte möglichst blasenfrei erfolgen.

Die Sensorplatte kann außerdem mittels einer strukturierten Deckplatte, die mit kapillarspaltbildenden Erhebungen sowie Ausnehmungen versehen ist und auf die Sensorplatte gelegt wird, in Teilbereiche unterteilt werden, wie dies z.B. in WO99/56878 offenbart ist und auf dessen vollständigen Inhalt hiermit Bezug genommen wird. Diese Teilbereiche können mit unterschiedlichen Proben befüllt werden, wobei die Befüllung durch Kapillarkräfte erfolgt.

Als weitere Ausführungsform sind Felder mit tiefen Kavitäten ähnlicher Dimension wie Mikrotiterplatten möglich (Fig. 6c), bei denen dann jedes Sensorfeld mit einer anderen Lösung 160 gemessen werden kann. (MTP-Platte mit Glas-Goldboden). In diesem Falle besteht die Sensorplatte aus einer sensorflächenbildenden Goldschicht 125 auf einem planaren Träger 10 mit Trennmitteln 119. Auch bei dieser Ausführungsform ist eine Küvettenumrandung sinnvoll.

Eine Variante der Herstellung der oben beschriebenen Sensorplatten (Biochips) besteht in der Möglichkeit, Polymere in dünnen Schichten z.B. durch Aufschleudern auf ein Substrat herzustellen. Die in gelöster, nicht ausgehärteter Form vorliegenden Polymere (z.B. PMMA, Polycarbonat, UV-härtende Klebstoffe, Photolacke oder siliziumhaltige Polymere (Cyclotene oder ORMOCERE)) werden auf das Glasträgermaterial aufgeschleudert oder vergossen. Um den Effekt der Absorption innerhalb der lichtleitenden Schicht zu erhalten, werden dem Polymer lichtabsorbierende Substanzen (z.B. Graphit oder Farbstoffe) zugesetzt, die im Wellenlängenbereich der SPR absorbieren (z.B. bei Gold oberhalb 500 nm), jedoch die Fotostrukturierbarkeit im UV nicht beeinflussen. Die Brechzahl des aufzutragenden Polymers sollte etwas größer sein als die des Glasträgers, damit der licht-wegleitende Effekt wie oben beschrieben eintritt. Zusätzlich sollte die Brechzahl des Glasträgers kompatibel mit dem SPR-Effekt sein. Bei Verwendung UV-härtender Polymere erfolgt nach dem gleichmäßigen Schichtauftrag ein Herauslösen der unbelichteten Bereiche, so dass Sensorfelder in Form von freien Bereichen auf dem Glasträger erhalten bleiben. Der Miniaturisierung der Sensorbereiche ist nur dadurch eine Grenze gesetzt, dass die Ausbildung von Oberflächenplasmonen noch möglich ist. Andere Polymere können durch Siebdrucktechnik, Lift-off-Verfahren und physikalischchemische Abscheidetechniken, oder andere Replikationstechniken in die gewünschte Sensorfeldstruktur (z.B. ein Rasterfeld) gebracht werden.

Nach der Strukturierung der Sensorfelder wird eine geeignete Küvettenumrandung aus einem Kunststoff aufgeklebt. Danach wird die gesamte Sensorplatte mit einer haftvermittelnden Schicht sowie mit einer SPR-fähigen Goldschicht bedampft. Dadurch erhält man die SPR-fähigen Sensorfelder an den Stellen, an denen kein Polymer zwischen Gold und Glas befindlich ist.

Ebenso wie für die Polymere beschrieben, lassen sich auch Lacke (z.B. Epoxydharze) mit UV-Licht fotostrukturieren, die im sichtbaren und IR-Bereich absorbieren.

Zwischen dem Prisma und der Sensorplatte ist ein optischer Vermittler (vorzugsweise Indexflüssigkeit) erforderlich, um die Sensorplatte dem Licht zugänglich zu machen. Typischerweise wird Immersionsöl für diese Problematik benutzt. Es ist aber auch denkbar, ein Polymer oder ein Gel als optischen Vermittler einzusetzen. Die Schicht mit Indexflüssigkeit sollte dicker sein als die Kohärenzlänge des Lichtes, um Interferenzen zu vermeiden. Bei thermischem Licht sind einige 100 μm ausreichend. Bevorzugt erfolgt eine Befüllung mittels Kapillarkräften, wobei ein Kapillarspalt mit geeigneten Abstandshaltern zwischen Sensorplatte und Prisma erzeugt wird. Dabei ist darauf zu achten, dass möglichst keine Luftblasen eingeschlossen werden, da ansonsten der darüber befindliche Bereich auf der Sensorplatte optisch nicht zugänglich ist.

Prinzipiell gibt es mehrere Möglichkeiten, die SPR-Sensorfelder optisch auszulesen. Bei sequentiellen Verfahren könnte ein Lichtstrahl ein Feld nach dem anderen abrastern, ähnlich wie in einem Laserscanner zur Materialbearbeitung. Stattdessen könnte auch die Sensorplatte auf dem Prisma mit Hilfe eines x-y-Verschiebetisches bewegt werden, um immer nur ein Sensorfeld in den Erfassungsbereich eines dünnen Lichtstrahls zu bringen.

Möglich ist auch ein zeilenweises Vorgehen, bei dem ein ortsauflösender Detektor Verwendung findet, in dessen einer Ortsrichtung die Lage des Streifens und in der zweiten Dimension die Wellenlängen- oder die Winkelabhängigkeit des Spektrums abgebildet wird. Um den Array auszulesen, müsste dann das Sensorfeld mit einem x-Verschiebetisch durch den zeilenförmigen Auslesebereich geschoben werden.

Außerdem ist auch eine zweidimensionale Abbildung der Sensorfläche auf einem ortsauflösenden Detektor möglich. Hier wird bei einer Variation des Winkels oder der Wellenlänge jeweils ein neues Bild detektiert. Aus dieser Serie von Bildern bei unterschiedlichen Winkeln oder Wellenlängen wird für jedes einzelne Sensorfeld ein Spektrum konstruiert, indem die Intensitätssumme über den dem Sensorfeld zugeordneten Pixelbereich gebildet wird (wie in WO00/31515 beschrieben). Vorzugsweise wird das Wellenlängenspektrum gewählt, weil so mit Hilfe von chromatisch korrigierter Optik eine ortsfeste Abbildung (auch bei unterschiedlichen Wellenlängen) ermöglicht wird. Im Gegensatz dazu benötigt man für den Fall einer winkelabhängigen Erfassung des Spektrums bewegende Elemente (Goniometer), wodurch das Erzielen einer ortsfesten Abbildung deutlich erschwert wird (denn der Betrachtungswinkel wird ständig geändert). Eine Wanderung der Sensorbereiche im Bild 510 (siehe Fig. 3) kann jedoch bei dieser winkelabhängigen Meßmethode durch numerische Verfahren der Bildverarbeitung berücksichtigt werden.

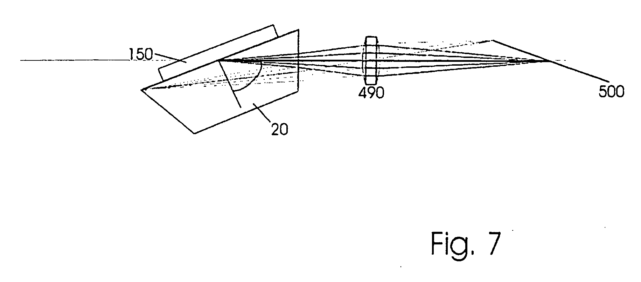

Versucht man auf dem Prisma einen zweidimensionalen Array anzuordnen, so muß man dieses Sensorfeld unter dem SPR-Winkel $\vartheta_{SPR}$ (der bei Gold ca. 65°-85° beträgt) auf einen Detektor abbilden. Eine scharfe Abbildung ist mit der Scheimpflug-Methode, bei der das Objekt (Boden der Küvette 150) als auch die Detektorebene 500 gegenüber der optischen Achse des abbildenden Objektivs 490 geneigt sind (siehe Prinzip-Skizze Fig. 7). Zum einen entstehen jedoch dadurch auf dem Bild die aus der Fotografie bekannten "stürzenden Linien" in der Richtung, in der das Objekt gekippt ist, und äquidistante Linien in der Richtung senkrecht dazu werden im Bild zu parallelen Linien mit zunehmendem Abstand. Dadurch wird eine Auswertung des Bildes mit einem rechtwinkligen Gitter erschwert.

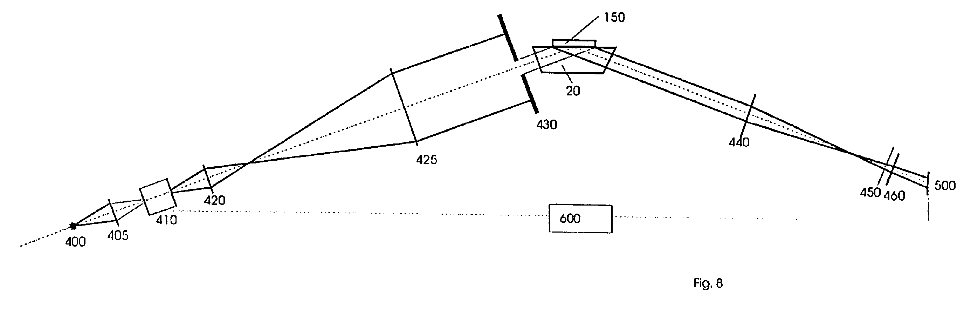

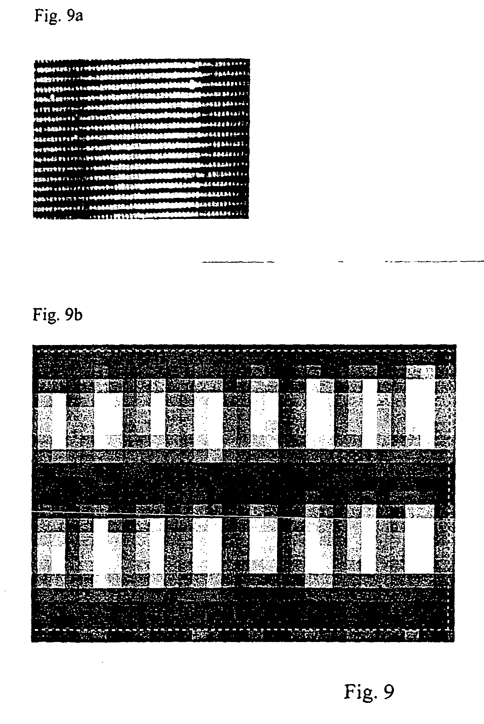

Diese Abbildungsverfälschungen lassen sich in einem Strahlengang mit telezentrischer Abbildung und paralleler Beleuchtung (vgl. WO 00/31515) vermeiden (Fig. 8). Hier wird monochromatisches Licht mit einem Teleskop bestehend aus den achromatischen Linsen 420 und 425 aufgeweitet und parallelisiert (zur vollständigen Ausleuchtung des Sensorfeldes). Eine Spalt-Blende 430 reduziert den Strahlquerschnitt auf eine rechteckige Form, die zur Beleuchtung des Eintrittsfensters des Prismas 20 benötigt wird. An dem SPR-fähigen strukturierten Boden der oben beschriebenen Küvette 150 wird das Licht unter dem SPR-Winkel reflektiert. Ein zweites Teleskop aus Achromat 440 und Objektiv 460 bildet den SPR-Küvettenboden in einem geeigneten Maßstab auf den CCD-Detektor 500 ab. Damit die Abbildung über die ganze Fläche fokussiert ist, wird der CCD-Chip gegen die optische Achse gekippt. Durch die telezentrische Abbildung wird aus einem rechtwinkligen Gitter auf dem Sensorfeld auch ein rechtwinkliges Bild auf dem Detektor erhalten. Wegen des großen SPR-Winkels erscheint das Bild der Sensorplatte in der Dimension, in der das Objekt gegenüber der opt. Achse gekippt ist, jedoch um den Faktor $1/\cos(\vartheta_{SPR})$ gestaucht (siehe auch Fig. 9). Um dieses Problem zu lösen sind folgende Methoden anwendbar:

1. Das Gitter des Sensorfeldes hat in der Richtung, die später gekippt abgebildet wird, einen größeren Gitterabstand als in der Richtung senkrecht dazu.

2. Ein anamorphotischer Objektiv-Vorsatz 450, ähnlich denen in der Kinotechnik verwendeten, kompensiert die Verzerrung in der einen Richtung.

3. Eine Kombination von 1. und 2. wird benutzt, um im Gesamten eine Abbildung zu erhalten, in der die Sensorfelder in beiden Bildrichtungen ausreichend aufgelöst sind.

Zur Aufnahme von Wellenlängenspektren wird das Licht der Lichtquelle 400 mit einer Optik 405 in einen Monochromator 410 eingekoppelt (Der Strahlengang in Fig. 8 ist nur der Übersichtlichkeit wegen in gestreckter Form gezeigt, in einem alternativen Aufbau kann mit Hilfe von Spiegeln der Strahlengang gefaltet werden, um einen kompakteren Aufbau zu erhalten). Der Monochromator wird über einen PC 600 gesteuert, der auch die Bilder der CCD einlesen kann. Für jede Wellenlänge wird nun ein Bild aufgenommen und daraus durch Summenbildung über Pixelbereiche ein Intensitätswert für jedes Sensorfeld erhalten. Durch Verstellen des Monochromators wird sukzessive ein Intensitätsspektrum für jedes Sensorfeld erhalten, das aufgrund der Plasmonenresonanz einen Verlauf wie in Fig. 1b zeigt.

Aufgrund der Möglichkeit sehr kleine Sensorflächen zu schaffen, und auch der Möglichkeit eine genaue Justierung bzw. Identifizierung der Sensorflächen in einer ortsauflösenden Abbildung zu erzielen, kann die Anordnung so aufgebaut werden, dass jedem Sensorfeld nur eine geringe Zahl von Pixeln in der Abbildung zugeordnet wird, nämlich weniger als zehn, vorzugsweise fünf oder weniger.

Beispiel:

Fig. 9a zeigt einen Ausschnitt (200x150 Pixel) aus dem Bild einer Sensorplatte mit der Rasterweite 562,5$\mu$m x 1125$\mu$m, das mit einer optischen Anordnung wie im letzten Abschnitt beschrieben erhalten wurde. Die Größe der quadratischen Sensorfelder beträgt 280x280$\mu$m. Mit diesen Dimensionen lassen sich ca. 12000 Sensorfelder auf der Fläche einer Mikrotiterplatte unterbringen. Die Strukturierung der Sensorplatte wurde mit Ormocer durchgeführt, dem Graphit beigemischt wurde. Die Dicke dieser Schicht betrug ca. 50 $\mu$m.

Die Abbildung erfolgt auf einen CCD-Chip mit einer Größe von 1024x1280 Pixeln. Die Vergößerung (Fig. 9b) zeigt, dass zur Detektion des Reflexionsspektrum eines Sensorfeldes etwa 5 Pixel zur Verfügung stehen.

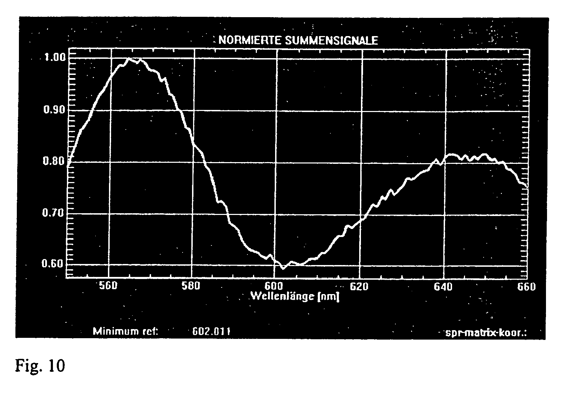

Ein aus 5 Pixeln erhaltenes Spektrum ist in Fig. 10 zu sehen. Hier ist die Transmission des Monochromators noch überlagert. Die Qualität dieser Spektren lässt auf eine Genauigkeit von 2 $10^{-4}$ zur Detektion von Brechungsindexänderungen für 12000 Proben innerhalb einer einzigen Messung schließen.

**Patentansprüche**

1. SPR-Sensoranordnung mit
   einer Vielzahl von SPR-Sensorflächen (120), welche auf einem Substrat (10, 20) in einem in einer Ebene liegenden zweidimensionalen Raster angeordnet sind, wobei die SPR-Sensorflächen (120) parallel zu der Ebene sind, und wobei Strahlung, welche unter bestimmten physikalischen Bedingungen Oberflächenplasmonen in den SPR-Sensorflächen (120) anregen kann, durch das Substrat (10, 20) geführt werden kann, um von den SPR-Sensorflächen reflektiert zu werden,
   Trennmitteln (110) zur Trennung der einzelnen SPR-Sensorflächen (120) von den jeweils benachbarten SPR-Sensorflächen (120),
   **dadurch gekennzeichnet, dass**
   die Trennmittel (110) strahlungsabsorbierend beschaffen sind, so dass zumindest außerhalb des Auftretens einer Oberflächenplasmonen-Resonanz in den SPR-Sensorflächen (120) die durch das Substrat (10, 20) geführte Strahlung (40) im Bereich der Trennmittel in einem anderen Maß reflektiert wird als im Bereich der SPR-Sensorflächen (120), um zumindest außerhalb des Auftretens einer Oberflächenplasmonen-Resonanz in den SPR-Sensorflächen (120) in der von den SPR-Sensorflächen (120) und den Trennmitteln (110) reflektierten Strahlung einen Kontrast zwischen den Trennmitteln (110) und den SPR-Sensorflächen (120) zu schaffen.

2. SPR-Sensoranordnung nach Anspruch 1, **dadurch gekennzeichnet, dass** die Trennmittel (110) und die SPR-Sensorflächen (120) so beschaffen sind, dass zumindest außerhalb des Auftretens einer Oberflächenplasmonen-Resonanz in den SPR-Sensorflächen (120) die durch das Substrat (10, 20) geführte Strahlung (40) im Bereich der Trennmittel weniger stark reflektiert wird als im Bereich der SPR-Sensorflächen (120)

3. SPR-Sensoranordnung nach Anspruch 2, **dadurch gekennzeichnet, dass** die Trennmittel (110) und die SPR-Sensorflächen (120) so beschaffen sind, dass auch beim Auftreten einer Oberflächenplasmonen-Resonanz in den SPR-Sensorflächen (120) die durch das Substrat (10, 20) geführte Strahlung (40) im Bereich der Trennmittel weniger stark reflektiert wird als im Bereich der SPR-Sensorflächen (120).

4. SPR-Sensoranordnung nach einem der Ansprüche 1 bis 3, **dadurch gekennzeichnet, dass** die Trennmittel (110) ein Kontrastbildungsmaterial umfassen, das nicht SPR-fähig ist.

5. SPR-Sensoranordnung nach Anspruch 4, **dadurch gekennzeichnet, dass** das Kontrastbildungsmaterial in direktem Kontakt mit dem Substrat (10, 20) ist.

6. SPR-Sensoranordnung nach Anspruch 4 oder 5, **dadurch gekennzeichnet, dass** das Kontrastbildungsmaterial eine absorbierende Metall- oder Halbeleiterschicht oder ein Polymer ist.

7. SPR-Sensoranordnung nach einem der Ansprüche 4 bis 6, **dadurch gekennzeichnet, dass** das Kontrastbildungsmaterial einen Brechungsindex hat, der größer oder gleich dem Brechungsindex des Substrats (10, 20) ist.

8. SPR-Sensoranordnung nach Anspruch 7, **dadurch gekennzeichnet, dass** der Brechungsindex des Kontrastbildungsmaterials um höchstens 0.1 größer ist als der Brechungsindex des Substrats (10, 20).

9. SPR-Sensoranordnung nach Anspruch 7 oder 8, **dadurch gekennzeichnet, dass** die Höhe und Breite einer aus dem Kontrastbildungsmaterial bestehenden Schicht so bestimmt ist, dass ein aus dem Substrat (10, 20) in die Schicht gebrochener Strahl höchstens zwei mal an der von der Substratoberfläche abgewandten Seite der Schicht zum Substart (10, 20) zurückreflektiert wird.

10. SPR-Sensoranordnung nach einem der Ansprüche 4 bis 9, **dadurch gekennzeichnet, dass** das Kontrastbildungsmaterial mit einem Material versetzt ist, das strahlungsabsorbierend wirkt.

11. SPR-Sensoranordnung nach Anspruch 10, **dadurch gekennzeichnet, dass** das strahlungsabsorbierende Material Kohlenstoff oder ein Farbstoff ist.

12. SPR-Sensoranordnung nach einem der Ansprüche 1 bis 11, **dadurch gekennzeichnet, dass** bezüglich der Substratoberfläche die Trennmittel (110) gegenüber den SPR-Sensorflächen (120) Erhebungen (115, 116, 117) bilden.

13. SPR-Sensoranordnung nach Anspruch 12, **dadurch gekennzeichnet, dass** die zur Substratoberfläche parallele Oberseite der Trennmittel (110) eine Schicht umfasst, die das gleiche SPR-fähige Material umfasst, das die SPR-Sensorflächen (120) bedeckt.

14. SPR-Sensoranordnung nach Anspruch 12 oder 13, **dadurch gekennzeichnet, dass** die Höhendifferenz der Trennmittel (110) gegenüber den SPR-Sensorflächen (120) 0.05 bis 5 mm beträgt.

15. SPR-Sensoranordnung nach einem der Ansprüche 12 bis 14, **dadurch gekennzeichnet, dass** die Flanken (112) der Trennmittel (110), welche jeweilige SPR-Sensorflächen (120) einfassen, eine hydrophobe Oberfläche aufweisen.

16. SPR-Sensoranordnung nach einem der Ansprüche 12 bis 14, **dadurch gekennzeichnet, dass** die zur Substratoberfläche parallele Oberseite (118) der Trennmittel (110) eine hydrophobe Oberfläche aufweist.

17. SPR-Sensoranordnung nach einem der Ansprüche 1 bis 16, **dadurch gekennzeichnet, dass** das Substrat (10, 20) ein Prisma (20) aus Glas oder Kunststoff ist.

18. SPR-Sensoranordnung nach einem der Ansprüche 1 bis 16, **dadurch gekennzeichnet, dass** das Substrat (10, 20) eine Platte (10) aus Glas oder Kunststoff ist.

19. SPR-Sensoranordnung nach Anspruch 18, **dadurch gekennzeichnet, dass** die Platte (10) auf einem Prisma (20) angebracht ist.

20. SPR-Sensoranordnung nach Anspruch 19, **dadurch gekennzeichnet, dass** eine Brechungsindex-Anpassungsschicht (30) angebracht ist zwischen der Platte (10) und dem Prisma (20).

21. SPR-Sensoranordnung nach Anspruch 20, **dadurch gekennzeichnet, dass** die Brechungsindex-Anpassungsschicht (30) flüssig ist und vorzugsweise Ölsäure umfasst.

22. SPR-Sensoranordnung nach Anspruch 21, **dadurch gekennzeichnet, dass** die SPR-Sensoranordnung so ausgebildet ist, dass die Brechungsindex-Anpassungsschicht (30) mittels von Kapillarkräften zwischen der Platte (10) und dem Prisma (20) eingefüllt wird.

23. SPR-Sensoranordnung nach einem der Ansprüche 18 bis 22, **dadurch gekennzeichnet, dass** entlang des Umfangs der Platte (10, 100) eine Umrandung (150) angebracht ist, so dass eine Probenflüssigkeit (160) auf der Platte gehalten werden kann.

24. SPR-Sensoranordnung nach einem der Ansprüche 18 bis 22, **dadurch gekennzeichnet, dass** Abstandshalter (180) auf der Platte (10, 100) vorgesehen sind, welche eine zweite Platte (190) tragen, um einen Kapillarspalt (170) zu bilden, der mit Probenflüssigkeit gefüllt werden kann.

25. SPR-Sensoranordnung nach einem der Ansprüche 1 bis 24, **dadurch gekennzeichnet, dass** sich mindestens 100 SPR-Sensorflächen/cm2 in der Ebene befinden, vorzugsweise mindestens 10000 Sensorflächen/cm2.

26. SPR-Sensoranordnung nach einem der Ansprüche 1 bis 25, **dadurch gekennzeichnet, dass** die SPR-Sensorflächen oval oder kreisförmig sind.

27. Verfahren zur Herstellung einer SPR-Sensoranordnung mit einer Vielzahl von SPR-Sensorflächen (120), welche auf einem Substrat (10, 20) in einem in einer Ebene liegenden zweidimensionalen Raster angeordnet sind, wobei die SPR-Sensorflächen (120) parallel zu der Ebene sind, und wobei Strahlung, welche unter bestimmten physikalischen Bedingungen Oberflächenplasmonen in den SPR-Sensorflächen (120) anregen kann, durch das Substrat (10, 20) geführt werden kann, um von den SPR-Sensorflächen reflektiert zu werden, Trennmitteln (110) zur Trennung der einzelnen SPR-Sensorflächen (120) von den jeweils benachbarten SPR-Sensorflächen (120), wobei die Trennmittel (110) strahlungsabsorbierend beschaffen sind, so dass zumindest außerhalb des Auftretens einer Oberflächenplasmonen-Resonanz in den SPR-Sensorflächen (120) die durch das Substrat (10, 20) geführte Strahlung (40) im Bereich der Trennmittel in einem anderen Maß reflektiert wird als im Bereich der SPR-Sensorflächen (120), um zumindest außerhalb des Auftretens einer Oberflächenplasmonen-Resonanz in den SPR-Sensorflächen (120) in der von den SPR-Sensorflächen (120) und den Trennmitteln (110) reflektierten Strahlung einen Kontrast zwischen den Trennmitteln (110) und den SPR-Sensorflächen (120) zu schaffen, umfassend die Schritte:

   Bildung bzw. Aufbringen der Trennmittel (110) auf dem Substrat (10, 20), so dass zwischen den Trennmitteln (110) freie Bereiche entstehen, welche SPR-Sensorflächen definieren, und
   Aufbringung eines SPR-geeigneten Materials zumindest in den freien Bereichen, um SPR-Sensorflächen (120) zu bilden.

28. Verfahren nach Anspruch 27, **dadurch gekennzeichnet, dass** der Schritt der Bildung der Trennmittel (110) den Schritt umfasst ein Polymer auf der Oberfläche des Substrats aufzubringen.

29. Verfahren nach Anspruch 28, **dadurch gekennzeichnet, dass** der Schritt der Bildung der Trennmittel (110) die Schritte umfasst:

   Aufbringen eines fotostrukturierbaren Polymers auf der gesamten Oberfläche des Substrats, Belichten der aufgebrachten Polymerschicht mit einer Maske, welche Bereiche definiert, die zu den Trennmitteln gehören, sowie Bereiche, die zu den SPR-Sensorflächen gehören, und Bearbeiten der belichteten Polymerschicht, um in den Bereichen, die zu den SPR-Sensorflächen gehören, die Substratoberfläche freizulegen.

30. Verfahren nach Anspruch 28, **dadurch gekennzeichnet, dass** der Schritt der Bildung der Trennmittel (110) die Schritte umfasst:

   Aufbringen eines Polymers auf der Oberfläche des Substrats in einem zwei-dimensionalen Raster, das die Trennmittel (110) und die SPR-Sensorflächen (120) definiert, und Aushärten des Polymers.

31. Verfahren nach Anspruch 30, **dadurch gekennzeichnet, dass** das Polymer mit einer Siebdrucktechnik aufgebracht wird.

32. Verfahren nach Anspruch 27, **dadurch gekennzeichnet, dass** der Schritt der Bildung der Trennmittel (110) den Schritt umfasst eine strukturierbare Siliziumschicht auf das Substrat aufzubringen.

33. Verfahren nach einem der Ansprüche 27 bis 32, **dadurch gekennzeichnet, dass** der Schritt der Aufbringung des SPR-geeigneten Materials den Schritt des Abscheidens eines Metalls umfasst.

34. Verfahren nach Anspruch 33, **dadurch gekennzeichnet, dass** vor dem Abscheiden des Metalls eine haftungsvermittelnde Schicht aufgebracht wird.

35. Verfahren nach einem der Ansprüche 33 oder 34, **dadurch gekennzeichnet, dass** das Metall auf der gesamten Oberfläche des strukturierten Substrats aufgedampft wird.

36. Verfahren nach einem der Ansprüche 27 bis 35, **gekennzeichnet durch** den Schritt der Anbringung einer Umrandung (150) an dem Substrat.

37. Verfahren nach Anspruch 36, **dadurch gekennzeichnet, dass** die Umrandung (150) angebracht wird nach dem Schritt der Bildung der Trennmittel (110) und vor dem Schritt der Aufbringung des SPR-geeigneten Materials.

38. Messanordnung für SPR-Messungen, umfassend eine SPR-Sensoranordnung nach einem der Ansprüche 1 bis 26, Bestrahlungsmittel (405, 410, 420, 425, 430) zur Leitung der Strahlung, die unter bestimmten physikalischen Bedingungen Oberflächenplasmonen in den SPR-Sensorflächen (120) anregen kann, in das Substrat (10, 20), Veränderungsmittel (600) zur Veränderung der physikalischen Bedingungen, und Empfangsmittel (440, 450, 460, 490, 500) zum Empfangen der Strahlung, die von der SPR-Sensoranordnung unter den verschiedenen physikalischen Bedingungen reflektiert wurde.

**39.** Messanordnung nach Anspruch 38, **dadurch gekennzeichnet, dass** die bestimmten physikalischen Bedingungen mit dem Einfallswinkel der Strahlung auf die SPR-Sensorflächen (120) und/oder der Wellenlänge der Strahlung zusammenhängen.

**40.** Messanordnung nach Anspruch 38 oder 39, **dadurch gekennzeichnet, dass** die SPR-Sensoranordnung und die Bestrahlungsmittel (405, 410, 420, 425, 430) so ausgebildet sind, dass die SPR-Sensorflächen (120) der SPR-Sensoranordnung sequentiell bestrahlt und detektiert werden.

**41.** Messanordnung nach Anspruch 40, **gekennzeichnet durch** ein Strahlsteuermittel in den Bestrahlungsmitteln (405, 410, 420, 425, 430), um einen Strahl so zu steuern, dass die SPR-Sensorflächen (120) der SPR-Sensoranordnung sequentiell bestrahlt und detektiert werden.

**42.** Messanordnung nach Anspruch 40, **gekennzeichnet durch** einen Verschiebetisch für eine zweidimensionale Verschiebung in der Ebene der SPR-Sensorflächen (120), welcher so gesteuert wird, dass die SPR-Sensorflächen (120) der SPR-Sensoranordnung sequentiell bestrahlt und detektiert werden.

**43.** Messanordnung nach Anspruch 38 oder 39, **dadurch gekennzeichnet, dass** die Empfangsmittel (440, 450, 460, 490, 500) einen in zwei Dimensionen ortsauflösenden Detektor umfassen.

**44.** Messanordnung nach Anspruch 43, **dadurch gekennzeichnet, dass** ein Verschiebetisch für eine eindimensionale Verschiebung in der Ebene der SPR-Sensorflächen (120) vorgesehen ist, um das zweidimensionale Raster der SPR-Sensorflächen (120) zeilenweise auszulesen.

**45.** Messanordnung nach Anspruch 43, **dadurch gekennzeichnet, dass** die Messanordnung so ausgebildet ist, dass die SPR-Sensorflächen (120) gleichzeitig bestrahlt werden und das Raster der SPR-Sensorflächen (120) zweidimensional auf den ortsauflösenden Detektor abgebildet wird.

**46.** Messanordnung nach Anspruch 45, **dadurch gekennzeichnet, dass** die Veränderungsmittel (600) so ausgebildet sind, dass die physikalischen Bedingungen durch die Veränderung des Werts mindestens eines physikalischen Parameters geändert werden, und dass Auswertemittel (600) vorgesehen sind, welche so ausgebildet sind, dass der Wert des physikalischen Parameters über einen Wertebereich verändert wird und bei jeder Veränderung des Werts des physikalischen Parameters eine Abbildung (510) des Rasters der SPR-Sensorflächen (120) aufgenommen wird, um ein Intensitätssignal zu gewinnen für jede SPR-Sensorfläche (120).

**47.** Messanordnung nach Anspruch 46, **dadurch gekennzeichnet, dass** die Abbildung (510) auf ein Pixelgitter erfolgt, und für jede SPR-Sensorfläche (120) das Intensitätssignal durch Bildung der Intensitätssumme über einen mit der jeweiligen SPR-Sensorfläche (120) in Beziehung stehenden Abbildungsbereich (121) gewonnen wird.

**48.** Messanordnung nach Anspruch 47, **dadurch gekennzeichnet, dass** der mit einer SPR-Sensorfläche (120) in Beziehung stehende Abbildungsbereich (121) zehn oder weniger Pixel umfasst, vorzugsweise fünf oder weniger.

**49.** Messanordnung nach einem der Ansprüche 46 bis 48, **dadurch gekennzeichnet, dass** der physikalische Parameter der Einfallswinkel der Strahlung auf die SPR-Sensorflächen (120) und/oder die Wellenlänge der Strahlung ist.

**50.** Messanordnung nach einem der Ansprüche 43 bis 49, **dadurch gekennzeichnet, dass** die Bestrahlungsmittel (405, 410, 420, 425, 430) Mittel (420, 425) zur Bildung eines Strahls paralleler Strahlung umfassen, um das Raster der SPR-Sensorflächen (120) auszuleuchten, und die Empfangsmittel (440, 450, 460, 490, 500) ein Teleskopelement (440, 450) umfassen, um die von der SPR-Sensoranordnung reflektierte Strahlung auf den Detektor abzubilden.

**51.** Messanordnung nach Anspruch 50, **dadurch gekennzeichnet, dass** der Detektor eine Empfangsfläche aufweist, welche gegenüber der optischen Achse gekippt ist.

**52.** Messanordnung nach Anspruch 51, **dadurch gekennzeichnet, dass** das Raster der SPR-Sensorflächen (120) rechtwinklig ist und einen größeren Rasterabstand in einer Richtung als in der dazu senkrechten Richtung hat, um zumindest einen Teil der Verzerrung in der Abbildung (510) auszugleichen, die durch den großen Einfallswinkel der Strahlung auf die Sensorfläche entsteht.

**53.** Messanordnung nach Anspruch 51 oder 52, **dadurch gekennzeichnet, dass** die Empfangsmittel (440, 450, 460, 490, 500) eine anamorphotische Linse (450) umfassen, um zumindest einen Teil der Verzerrung in der Abbildung (510) auszugleichen, die durch die Verkippung der Empfangsfläche gegenüber der optischen Achse entsteht.

**54.** Messanordnung nach einem der Ansprüche 43 bis 53, **dadurch gekennzeichnet, dass** der Detektor ein CCD-Element umfasst.

**55.** Verfahren zur Justierung einer Messanordnung nach einem der Ansprüche 38 bis 54, **dadurch gekennzeichnet, dass** die SPR-Sensoranordnung mit Strahlung unter solchen physikalischen Bedingungen bestrahlt wird, dass keine Oberflächenplasmonen in den SPR-Sensorflächen angeregt werden, und mit Hilfe des Kontrasts zwischen den SPR-Sensorflächen (120) und den Trennmitteln (110) die SPR-Sensorflächen (120) und die Trennmittel in den Empfangsmitteln (440, 450, 460, 490, 500) voneinander unterschieden werden, um eine Beziehung zwischen Sensorflächen und zugehörigen Bereichen in der Abbildung zu bestimmen.

**56.** Messverfahren unter Verwendung einer Messanordnung nach einem der Ansprüche 38 bis 54, **dadurch gekennzeichnet, dass**
ein vorbestimmter Stoff auf die dem Substrat (10, 20) abgewandte Oberfläche der SPR-Sensorflächen (120) der SPR-Sensoranordnung aufgebracht wird,
mindestens ein physikalischer Parameter, von welchem die physikalischen Bedingungen abhängen, von welchen das Auftreten von Oberflächenplasmonen in den SPR-Sensorflächen abhängt, über einen vorbestimmten Wertebereich verändert wird, um den Bereich der Oberflächenplasmonen-Resonanz zu überstreichen und ein Spektrum der reflektierten Strahlung für jede SPR-Sensorfläche abhängig von dem physikalischen Parameter aufzunehmen,
auszumessende Proben auf die mit dem vorbestimmten Stoff überzogenen SPR-Sensorflächen gebracht werden,
der mindestens eine physikalische Parameter erneut über den vorbestimmten Wertebereich verändert wird, um erneut ein Spektrum der reflektierten Strahlung für jede SPR-Sensorfläche abhängig von dem physikalischen Parameter aufzunehmen, und die Verschiebung des Resonanzpunkts in den zwei Spektren für jede SPR-Sensorfläche (120) bestimmt wird, um die auszumessenden Proben zu charakterisieren.

**57.** Messverfahren nach Anspruch 56, **dadurch gekennzeichnet, dass** der vorbestimmte Stoff mit Hilfe von Spotting-Technik auf die SPR-Sensorflächen gebracht werden.

**58.** Messverfahren nach Anspruch 57, **dadurch gekennzeichnet, dass** der vorbestimmte Stoff ein kleines organisches Molekül ist.

**59.** Messverfahren nach einem der Ansprüche 56 bis 58, **dadurch gekennzeichnet, dass** die auszumessenden Proben biologische Makromoleküle enthalten und ein Hochdurchsatz-Screening durchgeführt wird.

**Claims**

**1.** SPR sensor arrangement having
a multiplicity of SPR sensor areas (120) which are arranged on a substrate (10, 20) in a two-dimensional grid pattern lying in a plane, wherein the SPR sensor areas (120) are parallel to the plane, and wherein radiation, which under certain physical conditions can excite surface plasmons in the SPR sensor areas (120), can be guided through the substrate (10, 20) in order to be reflected by the SPR sensor areas, partitioning means (110) for separating the individual SPR sensor areas (120) from each of their neighbouring SPR sensor areas (120),
**characterised in that**
the partitioning means (110) are of radiation-absorbent composition so that, at least apart from the occurrence of a surface plasmon resonance in the SPR sensor areas (120), the radiation (40) guided through the substrate (10, 20) is reflected to a different degree in the region of the partitioning means than in the region of the SPR sensor areas (120) in order, at least apart from the occurrence of a surface plasmon resonance in the SPR sensor areas (120), to create a contrast between the partitioning means (110) and the SPR sensor areas (120) in the radiation reflected by the SPR sensor areas (120) and the partitioning means (110).

**2.** SPR sensor arrangement according to claim 1; **characterised in that** the partitioning means (110) and the SPR sensor areas (120) are of such a composition that, at least apart from the occurrence of a surface plasmon resonance in the SPR sensor areas (120), the radiation (40) guided through the substrate (10, 20) is less strongly reflected in the region of the partitioning means than in the region of the SPR sensor areas (120).

**3.** SPR sensor arrangement according to claim 2, **characterised in that** the partitioning means (110) and the SPR sensor areas (120) are of such a composition that, even in the event of the occurrence of a surface plasmon resonance in the SPR sensor areas (120), the radiation (40) guided through the substrate (10, 20) is less strongly reflected in the region of the partitioning means than in the region of the SPR sensor areas (120).

**4.** SPR sensor arrangement according to any of claims 1 to 3, **characterised in that** the partitioning means (110) comprise a contrast-forming material which is not capable of SPR.

**5.** SPR sensor arrangement according to claim 4, **characterised in that** the contrast-forming material is in direct contact with the substrate (10, 20).

**6.** SPR sensor arrangement according to claim 4 or 5, **characterised in that** the contrast-forming material is an absorbent metal layer or semiconductor layer or a polymer.

**7.** SPR sensor arrangement according to any of claims 4 to 6, **characterised in that** the contrast-forming material has a refractive index which is greater than or equal to the refractive index of the substrate (10, 20).

**8.** SPR sensor arrangement according to claim 7, **characterised in that** the refractive index of the contrast-forming material is at most 0.1 greater than the refractive index of the substrate (10, 20).

**9.** SPR sensor arrangement according to claim 7 or 8, **characterised in that** the height and width of a layer composed of the contrast-forming material is determined in such a way that a beam refracted from the substrate (10, 20) into the layer is reflected back to the substrate (10, 20) at most twice on the side of the layer remote from the substrate surface.

**10.** SPR sensor arrangement according to any of claims 4 to 9, **characterised in that** the contrast-forming material is mixed with a material having a radiation-absorbent action.

**11.** SPR sensor arrangement according to claim 10, **characterised in that** the radiation-absorbent material is carbon or a dye.

**12.** SPR sensor arrangement according to any of claims 1 to 11, **characterised in that** with reference to the substrate surface the partitioning means (110) form elevations (115, 116, 117) with respect to the sensor surfaces (120).

**13.** SPR sensor arrangement according to claim 12, **characterised in that** the upper side of the partitioning means (110) parallel to the substrate surface comprises a layer comprising the same SPR-capable material covering the SPR sensor areas (120).

**14.** SPR sensor arrangement according to claim 12 or 13, **characterised in that** the difference in height of the partitioning means (110) with respect to the SPR sensor areas (120) is 0.05 to 5 mm.

**15.** SPR sensor arrangement according to any of claims 12 to 14, **characterised in that** the flanks (112) of the partitioning means (110) framing each of the SPR sensor areas (120) have a hydrophobic surface.

**16.** SPR sensor arrangement according to any of claims 12 to 14, **characterised in that** the upper side (118) of the partitioning means (110) parallel to the substrate surface has a hydrophobic surface.

**17.** SPR sensor arrangement according to any of claims 1 to 16, **characterised in that** the substrate (10, 20) is a prism (20) of glass or plastic.

**18.** SPR sensor arrangement according to any of claims 1 to 16, **characterised in that** the substrate (10, 20) is a sheet (10) of glass or plastic.

**19.** SPR sensor arrangement according to claim 18, **characterised in that** the sheet (10) is fitted on a prism (20).

**20.** SPR sensor arrangement according to claim 19, **characterised in that** a refractive index adaptation layer (30) is fitted between the sheet (10) and the prism (20).

**21.** SPR sensor arrangement according to claim 20, **characterised in that** the refractive index adaptation layer (30) is liquid and preferably comprises oleic acid.

**22.** SPR sensor arrangement according to claim 21, **characterised in that** the SPR sensor arrangement is constructed in such a way that the refractive index adaptation layer (30) is fed in by means of capillary forces between the sheet (10) and the prism (20).

**23.** SPR sensor arrangement according to any of claims 18 to 22, **characterised in that** a border (150) is fitted along the perimeter of the sheet (10, 100) so that a sample liquid (160) can be held on the sheet.

**24.** SPR sensor arrangement according to any of claims 18 to 22, **characterised in that** spacers (180) are provided on the sheet (10, 100) which carry a second sheet (190) in order to form a capillary gap (170) which can be filled with sample liquid.

**25.** SPR sensor arrangement according to any of claims 1 to 24, **characterised in that** at least 100 SPR sensor areas/cm$^2$ are located in the plane, preferably at least 10,000 sensor areas/cm$^2$.

**26.** SPR sensor arrangement according to any of claims 1 to 25, **characterised in that** the SPR sensor areas are oval or circular.

**27.** Method for producing a SPR sensor arrangement having a multiplicity of SPR sensor areas (120) which are arranged on a substrate (10, 20) in a two-dimensional grid pattern lying in a plane, wherein the SPR sensor areas (120) are parallel to the plane, and wherein radiation, which under certain physical conditions can excite surface plasmons in the SPR sensor areas (120), can be guided through the substrate (10, 20) in order to be reflected by the SPR sensor areas, partitioning means (110) for separating the individual SPR sensor areas (120) from each of their neighbouring SPR sensor areas (120), wherein the partitioning means (110) are of radiation-absorbent composition so that, at least apart from the occurrence of a surface plasmon resonance in the SPR sensor areas (120), the radiation (40) guided through the substrate (10, 20) is reflected to a different degree in the region of the partitioning means than in the region of the SPR sensor areas (120) in order, at least apart from the occurrence of a surface plasmon resonance in the SPR sensor areas (120), to create a contrast between the partitioning means (110) and the SPR sensor areas (120) in the radiation reflected by the SPR sensor areas (120) and the partitioning means (110), comprising the steps:

> forming or applying the partitioning means (110) on the substrate (10, 20) so that free regions defining SPR sensor areas are produced between the partitioning means (110), and
> applying a SPR-suitable material at least in the free regions in order to form SPR sensor areas (120).

28. Method according to claim 27, **characterised in that** the step of forming the partitioning means (110) comprises the step of applying a polymer to the surface of the substrate.

29. Method according to claim 28, **characterised in that** the step of forming the partitioning means (110) comprises the steps:

> applying a photo-structurable polymer over the entire surface of the substrate,
> exposing the applied polymer layer to radiation using a mask defining regions which belong to the partitioning means as well as regions which belong to the SPR sensor areas, and
> machining the exposed polymer layer in order to lay bare the substrate surface in the regions belonging to the SPR sensor areas.

30. Method according to claim 28, **characterised in that** the step for forming the partitioning means (110) comprises the steps:

> applying a polymer to the surface of the substrate in a two-dimensional grid pattern defining the partitioning means (110) and the SPR sensor areas (120), and
> curing the polymer.

31. Method according to claim 30, **characterised in that** the polymer is applied by a screen printing technique.

32. Method according to claim 27, **characterised in that** the step of forming the partitioning means (110) comprises the step of applying a structurable silicon layer onto the substrate.

33. Method according to any of claims 27 to 32, **characterised in that** the step of applying the SPR-suitable material comprises the step of depositing a metal.

34. Method according to claim 33, **characterised in that** prior to depositing the metal a bonding layer is applied.

35. Method according to one of claims 33 or 34, **characterised in that** the metal is vapour-deposited on the entire surface of the structured substrate.

36. Method according to any of claims 27 to 35, **characterised by** the step of fitting a border (150) to the substrate.

37. Method according to claim 36, **characterised in that** the border (150) is fitted after the step of forming the partitioning means (110) and prior to the step of applying the SPR-suitable material.

38. Measuring arrangement for SPR measurements comprising
a SPR sensor arrangement according to any of claims 1 to 26,
irradiation means (405, 410, 420, 425, 430) for guiding the radiation, which under certain physical conditions can excite surface plasmons in the SPR sensor areas (120), into the substrate (10, 20),
alteration means (600) for altering the physical conditions, and
reception means (440, 450, 460, 490, 500) for receiving the radiation which has been reflected by the SPR sensor arrangement under the different physical conditions.

39. Measuring arrangement according to claim 38, **characterised in that** the certain physical conditions are related to the angle of incidence of the radiation onto the SPR sensor areas (120) and/or the wavelength of the radiation.

40. Measuring arrangement according to claim 38 or 39, **characterised in that** the SPR sensor arrangement and the irradiation means (405, 410, 420, 425, 430) are constructed in such a way that the SPR sensor areas (120) of the SPR sensor arrangement are sequentially irradiated and detected.

41. Measuring arrangement according to claim 40, **characterised by** a beam control means in the irradiation means (405, 410, 420, 425, 430) in order to control a beam so that the SPR sensor areas (120) of the SPR sensor arrangement are sequentially irradiated and detected.

42. Measuring arrangement according to claim 40, **characterised by** a shifting bench for two-dimensional displacement in the plane of the SPR sensor areas (120) which bench is controlled in such a way that the SPR sensor areas (120) of the SPR sensor arrangement are sequentially irradiated and detected.

43. Measuring arrangement according to claim 38 or 39, **characterised in that** the reception means (440, 450, 460, 490, 500) comprise a detector locally resolving in two dimensions.

44. Measuring arrangement according to claim 43, **characterised in that** a shifting bench for one-dimensional displacement in the plane of the SPR sensor areas (120) is provided in order to read off line by line the two-dimensional grid pattern of the SPR sensor areas (120).

45. Measuring arrangement according to claim 43, **characterised in that** the measuring arrangement is constructed in such a way that the SPR sensor areas (120) are irradiated simultaneously and the grid pattern of the SPR sensor areas (120) are depicted in two dimensions on the locally resolving detector.

46. Measuring arrangement according to claim 45, **characterised in that** the alteration means (600) are constructed in such a way that the physical conditions are changed by altering the value of at least one physical parameter and that evaluation means (600) are provided which are constructed in such a way that the value of the physical parameter is altered over a value range and on each alteration of the value of the physical parameter an image (510) of the grid pattern of the SPR sensor areas (120) is recorded in order to obtain an intensity signal for each SPR sensor area (120).

47. Measuring arrangement according to claim 46, **characterised in that** the imaging (510) ensues on a pixel grid and for each SPR sensor area (120) the intensity signal is obtained by summing the intensity over an imaging region (121) related to the respective SPR sensor area (120).

48. Measuring arrangement according to claim 47, **characterised in that** the imaging region (121) related to a SPR sensor area (120) comprises ten or fewer pixels, preferably five or fewer.

49. Measuring arrangement according to any of claims 46 to 48, **characterised in that** the physical parameter is the angle of incidence of the radiation on the SPR sensor areas (120) and/or the wavelength of the radiation.

50. Measuring arrangement according to any of claims 43 to 49, **characterised in that** the irradiation means (405, 410, 420, 425, 430) comprise means (420, 425) for forming a beam of parallel radiation in order to illuminate the grid pattern of the SPR sensor areas (120) and the reception means (440, 450, 460, 490, 500) comprise a telescope element (440, 450) in order to project the radiation reflected by the SPR sensor arrangement onto the detector.

51. Measuring arrangement according to claim 50, **characterised in that** the detector has a receiving area which is tilted with respect to the optical axis.

52. Measuring arrangement according to claim 51, **characterised in that** the grid pattern of the SPR sensor areas (120) is rectangular and has a greater grid spacing in one direction than in the direction perpendicular thereto in order to compensate for at least some of the distortion in the image (510) produced by the high angle of incidence of the radiation on the sensor area.

53. Measuring arrangement according to claim 51 or 52, **characterised in that** the reception means (440, 450, 460, 490, 500) comprise an anamorphic lens (450) in order to compensate for at least some of the distortion in the image (510) produced by the tilting of the receiving area with respect to the optical axis.

54. Measuring arrangement according to any of claims 43 to 53, **characterised in that** the detector comprises a CCD element.

55. Method for adjusting a measuring arrangement according to any of claims 38 to 54, **characterised in that** the SPR sensor arrangement is irradiated with radiation under such physical conditions that no surface plasmons are excited in the SPR sensor areas and with the aid of the contrast between the SPR sensor areas (120) and the partitioning means (110), the SPR sensor areas (120) and the partitioning means in the reception means (440, 450, 460, 490, 500) are distinguished from one another in order to determine a relationship between sensor areas and associated regions in the image.

56. Measuring method making use of a measuring arrangement according to any of claims 38 to 54, **characterised in that**
a predetermined substance is applied to the surface of the SPR sensor areas (120) of the SPR sensor arrangement facing away from the substrate (10, 20),
at least one physical parameter, on which the physical conditions depend and on which the occurrence of surface plasmons in the SPR sensor areas depends, is altered over a predetermined range of values in order to sweep through the region of surface plasmon resonance and to record a spectrum of the reflected radiation for each SPR sensor area as a function of the physical parameter,
samples to be measured are applied to the SPR sensor areas coated with the predetermined surface,
the at least single physical parameter is altered once more over the predetermined range of values in order once again to record a spectrum of the reflected radiation for each SPR sensor area as a function of the physical parameter, and
the shift of the resonance point in the two spectra for each SPR sensor area (120) is determined in order to characterise the samples to be measured.

57. Measuring method according to claim 56, **characterised in that** the predetermined substance is applied to the SPR sensor areas with the aid of spotting technology.

58. Measuring method according to claim 57, **characterised in that** the predetermined substance is a small organic molecule.

59. Measuring method according to any of claims 56 to 58, **characterised in that** the samples to be measured contain biological macromolecules and high-throughput screening is carried out.

**Revendications**

1. Dispositif de détection SPR, comprenant
une pluralité de surfaces de capteur SPR (120), disposées sur un substrat (10, 20) en une trame bidimensionnelle située dans un plan, les surfaces de capteur SPR (120) étant parallèles au plan, et où un rayonnement, qui, dans des conditions physiques déterminées, peut exciter des plasmons de surface dans les surfaces de capteur SPR (120), peut être guidé à travers le substrat (10, 20) pour être réfléchi par les surfaces de capteur SPR,
des moyens de séparation (110) pour séparer les différentes surfaces de capteur SPR (120) des surfaces de capteur SPR (120) chaque fois voisines, **caractérisé en ce que**
les moyens de séparation (110) sont créés en absorbant le rayonnement, de manière que, au moins hors de la survenance d'une résonance des plasmons de surface dans les surfaces de capteur SPR (120), le rayonnement (40) étant guidé à travers le substrat (10, 20) et réfléchi dans la zone des moyens de séparation à un autre degré que dans la zone des surfaces de capteur (120), pour, au moins hors de la survenance d'une résonance à plasmon de surface, dans les surfaces de capteur SPR (120), dans le rayonnement réfléchi par les surfaces de capteur SPR (120) et les moyens de séparation (110), créer un contraste entre les moyens de séparation (110) et les surfaces de capteur SPR (120).

2. Dispositif de détection SPR selon la revendication 1, **caractérisé en ce que** les moyens de séparation (110) et les surfaces de capteur SPR (120) sont tels que, au moins hors de la survenance d'une résonance des plasmons de surface dans les surfaces de capteur SPR (120), le rayonnement (40) guidé à travers le substrat (10, 20) soit réfléchi moins fortement dans la zone des moyens de séparation que dans la zone des surfaces de capteur SPR (120).

3. Dispositif de détection SPR selon la revendication 2, **caractérisé en ce que** les moyens de séparation (110) et les surfaces de capteur SPR (120) sont tels que, également en cas de survenance d'une résonance de plasmon de surface dans les surfaces de capteur SPR (120), le rayonnement (40) guidé à travers le substrat (10, 20), dans la zone des moyens de séparation, soit réfléchi moins fortement que dans la zone des surfaces de capteur SPR (120).

4. Dispositif de détection SPR selon l'une des revendications 1 à 3, **caractérisé en ce que** les moyens de séparation (110) comprennent un matériau de séparation (110) ou de formateur de contraste qui ne présente aucune aptitude à la résonance SPR.

5. Dispositif de détection SPR selon la revendication 4, **caractérisé en ce que** le matériau formateur de contraste est en contact direct avec le substrat (10, 20).

6. Dispositif selon la revendication 4 ou 5, **caractérisé en ce que** le matériau formateur de contraste est une couche métallique ou semi-conductrice absorbante, ou bien un polymère absorbant.

7. Dispositif selon l'une des revendications 4 à 6, **caractérisé en ce que** le matériau formateur de contraste présente un indice de réfraction supérieur ou égal à l'indice de réfraction du substrat (10, 20).

8. Dispositif selon la revendication 7, **caractérisé en ce que** l'indice de réfraction du matériau formateur de contraste est supérieur d'au plus 0,1 à l'indice de réfraction du substrat (10, 20).

9. Dispositif selon la revendication 7 ou 8, **caractérisé en ce que** la hauteur et la largeur d'une couche composée du matériau formateur de contraste sont telles qu'un rayon, réfracté dans la couche depuis le substrat (10, 20), est rétro-réfléchi vers le substrat (10, 20), au moins deux fois sur la face, opposée à la surface de substrat, de la couche.

10. Dispositif selon l'une des revendications 4 à 9, **caractérisé en ce que** le matériau formateur de contraste est mélangé à un matériau absorbant le rayonnement.

11. Dispositif selon la revendication 10, **caractérisé en ce que** le matériau absorbant le rayonnement est du carbone ou un colorant.

12. Dispositif selon l'une des revendications 1 à 11, **caractérisé en ce que**, par rapport à la surface de substrat, les moyens de séparation (110) forment des reliefs (115, 116, 117) par rapport aux faces de capteur SPR (120).

13. Dispositif selon la revendication 12, **caractérisé en ce que** la face supérieure, parallèle à la surface de substrat des moyens de séparation (110), comprend une couche, comprenant le même matériau à aptitude de résonance SPR que celui qui couvre les surfaces de capteur SPR (120).

14. Dispositif selon la revendication 12 ou 13, **caractérisé en ce que** la différence de hauteur des moyens de séparation (110) par rapport aux surfaces de capteur SPR (120) est de 0,05 à 5 mm.

15. Dispositif selon l'une des revendications 12 à 14, **caractérisé en ce que** les flancs (112) des moyens de séparation (110), qui incluent des surfaces de capteur SPR (120) respectives, présentent une surface hydrophobe.

16. Dispositif selon l'une des revendications 12 à 14, **caractérisé en ce que** la face supérieure (118), parallèle à la surface de substrat, des moyens de séparation (110) présente une surface hydrophobe.

17. Dispositif selon l'une des revendications 1 à 16, **caractérisé en ce que** le substrat (10, 20) est un prisme (20) en verre ou en matière plastique.

18. Dispositif selon l'une des revendications 1 à 16, **caractérisé en ce que** le substrat (10, 20) est une plaque (10) en verre ou en matière plastique.

19. Dispositif selon la revendication 18, **caractérisé en ce que** en ce la plaque (10) est appliquée sur un prisme (20).

20. Dispositif selon la revendication 19, **caractérisé en ce qu'**une couche d'adaptation d'indice de réfraction (30) est montée entre la plaque (10) et le prisme (20).

21. Dispositif selon la revendication 20, **caractérisé en ce que** la couche d'adaptation de l'indice de réfraction (30) est fluide et comprend, de préférence, de l'acide oléique.

22. Dispositif selon la revendication 21, **caractérisé en ce que** le dispositif à capteurs SPR est réalisé de manière que la couche d'adaptation de l'indice de réfraction (30) est insérée au moyen des efforts capillaires agissant entre la plaque (10) et le prisme (20).

23. Dispositif selon l'une des revendications 18 à 22, **caractérisé en ce que**, le long de la périphérie de la plaque (10, 100), est montée une bordure (150) faisant qu'un liquide échantillon (160) peut être maintenu sur la plaque.

24. Dispositif selon l'une des revendications 18 à 22, **caractérisé en ce que** des éléments d'espacement (180) sont prévus sur la plaque (10, 100) portant une deuxième plaque (190), pour former un intervalle capillaire (170) pouvant être rempli par un liquide échantillon.

25. Dispositif selon l'une des revendications 1 à 24, **caractérisé en ce qu'**au moins 100 surfaces de capteurs SPR/cm$^2$, de préférence au moins 10000 surfaces de capteur/cm$^2$, se trouvent dans un plan.

26. Dispositif selon l'une des revendications 1 à 25, **caractérisé en ce que** les surfaces de capteur SPR sont ovales ou à forme circulaire.

27. Procédé de fabrication d'un dispositif de détection SPR, avec une pluralité de surfaces de capteur (120) disposées sur un substrat (10, 20) selon une trame bidimensionnelle située dans un plan, les surfaces de capteur SPR (120) s'étendant parallèlement au plan, et un rayonnement qui, dans des conditions physiques déterminées, peut exciter des plasmons de surface dans les surfaces de capteurs SPR (120), peut être guidé à travers le substrat (10, 20) pour être réfléchi par les surfaces de capteur SPR, des moyens de séparation (110) étant prévus, pour séparer les différentes surfaces de capteur SPR (120) des surfaces de capteur SPR (120) chaque fois voisines, les moyens de séparation (110) absorbant le rayonnement, de manière que, au moins hors de la survenance d'une résonance de plasmon de surface dans les surfaces de capteur SPR (120), le rayonnement (40), guidé à travers le substrat (10, 20) dans la zone des moyens de séparation, soit réfléchi à un autre degré que dans la zone des surfaces de capteur SPR (120) pour, au moins hors de la survenance d'une résonance de plasmon de surface dans les surfaces de capteur SPR (120) dans le rayonnement réfléchi par les surfaces de capteur SPR (120) et les moyens de séparation (110), créer un contraste entre les moyens de séparation (110) et les surfaces de capteur SPR (120), comprenant les étapes consistant en :

la formation ou application des moyens de séparation (110) sur le substrat (10, 20), de manière qu'entre les moyens de séparation (110) soient créées des zones libres, qui définissent des surfaces de capteur SPR, et
l'application d'un matériau convenant pour la résonance SPR au moins dans les zones libres, pour former des surfaces de capteur SPR (120).

28. Procédé selon la revendication 27, **caractérisé en ce que** l'étape de formation des moyens de séparation (110) comprend l'étape d'application d'un polymère sur la surface du substrat.

29. Procédé selon la revendication 28, **caractérisé en ce que** l'étape de formation des moyens de séparation (110) comprend les étapes suivantes :

application d'un polymère photo-structurable sur l'ensemble de la surface du substrat,
exposition de la couche de polymère appliquée avec un masque qui définit des zones qui appartiennent aux moyens de séparation, ainsi que des zones qui appartiennent aux surfaces de capteur SPR, et
usinage de la couche de polymère exposée, pour, dans les zones qui appartiennent aux surfaces de capteur SPR, libérer la surface de substrat.

30. Procédé selon la revendication 28, **caractérisé en ce que** en ce l'étape de formation des moyens de séparation (110) comprend les étapes consistant à :

appliquer un polymère sur la surface du substrat selon une trame bidimensionnelle, qui définit les moyens de séparation (110) et les surfaces de capteur SPR (120), et
durcir le polymère.

31. Procédé selon la revendication 30, **caractérisé en ce que** le polymère est appliqué avec une technique d'impression sérigraphique.

32. Procédé selon la revendication 27, **caractérisé en ce que** l'étape de formation des moyens de séparation (110) comprend l'étape d'application sur le substrat d'une couche silicium structurable.

33. Procédé selon l'une des revendications 27 à 32, **caractérisé en ce que** l'étape d'application du matériau convenant pour la résonance SPR comprend l'étape de déposition d'un métal.

34. Procédé selon la revendication 33, **caractérisé en**

ce qu'une couche, conférant une adhésion, est appliquée avant la déposition du métal.

35. Procédé selon l'une des revendications 33 ou 34, **caractérisé en ce que** le métal est appliqué par vaporisation sur l'ensemble de la surface du substrat structuré.

36. Procédé selon l'une des revendications 27 à 35, **caractérisé par** l'étape d'application d'une bordure (150) sur le substrat.

37. Procédé selon la revendication 36, **caractérisé en ce que** la bordure (150) est appliquée après l'étape de formation des moyens de séparation (110) et avant l'étape d'application du matériau convenant à la résonance SPR.

38. Dispositif de mesure pour des mesures SPR, comprenant :

un dispositif de détection SPR selon l'une des revendications 1 à 26,
des moyens d'irradiation (405, 410, 420, 425, 430) pour guider le rayonnement, qui, dans des conditions physiques déterminées, peut exciter des plasmons de surface dans les surfaces de capteur SPR (120), dans le substrat (10, 20),
des moyens de modification (600), pour modifier les conditions physiques, et
des moyens de réception (440, 450, 460, 490, 500) pour recevoir le rayonnement, ayant été réfléchi par le dispositif de détection SPR, dans les différentes conditions physiques.

39. Dispositif de mesure selon la revendication 38, **caractérisé en ce que** les conditions physiques déterminées sont liées à l'angle d'incidence du rayonnement sur les faces de capteur SPR (120) et/ou la longueur d'onde du rayonnement.

40. Dispositif de mesure selon la revendication 38 ou 39, **caractérisé en ce que** le dispositif de détection SPR et les moyens d'irradiation (405, 410, 420, 425, 430) sont réalisés de manière que les faces de capteur SPR (120) du dispositif de détection SPR sont irradiées et détectées séquentiellement.

41. Dispositif de mesure selon la revendication 40, **caractérisé par** un moyen de commande de rayonnement dans les moyens d'irradiation (405, 410, 420, 425, 430), pour commander un rayon, de manière que les faces de capteur SPR (120) du dispositif de détection SPR soient irradiées et détectées séquentiellement.

42. Dispositif de mesure selon la revendication 40, **caractérisé par** une table mobile en translation pour un déplacement bidimensionnel dans le plan des faces de capteur SPR (120), table commandée de manière que les faces de capteur SPR (120) du dispositif de détection SPR soient irradiées et détectées séquentiellement.

**43.** Dispositif de mesure selon la revendication 38 ou 39, **caractérisé en ce que** les moyens de réception (440, 450, 460, 490, 500) comprennent un détecteur à résolution locale en deux dimensions.

**44.** Dispositif de mesure selon la revendication 43, **caractérisé en ce qu'**une table, mobile en translation pour un déplacement unidimensionnel dans le plan des faces de capteur SPR (120), est prévue, pour lire ligne par ligne la trame bidimensionnelle des faces de capteur SPR (120).

**45.** Dispositif de mesure selon la revendication 43, **caractérisé en ce que** le dispositif de mesure est réalisé de manière que les faces de capteur SPR (120) soient irradiées simultanément et que la trame des faces de capteur SPR (120) soit projetée de façon bidimensionnelle sur le détecteur à résolution locale.

**46.** Dispositif de mesure selon la revendication 45, **caractérisé en ce que** les moyens de modification (600) sont réalisés de manière que les conditions physiques soient modifiées par la modification de la valeur d'au moins un paramètre physique, et **en ce que** des moyens d'évaluation (600) sont prévus, réalisés de manière que la valeur du paramètre physique soit modifiée sur une plage de valeurs, et qu'à chaque modification de la valeur du paramètre physique, une projection (510) de la trame des faces de capteur SPR (120) soit enregistrée, pour obtenir un signal d'intensité pour chaque face de capteur SPR (120).

**47.** Dispositif de mesure selon la revendication 46, **caractérisé en ce que** la projection (510) se fait sur une grille de pixels et, pour chaque face de capteur SPR (120), le signal d'intensité est obtenu par formation de la somme d'intensité sur une zone de projection (121) en relation avec la face de capteur SPR (120) respective.

**48.** Dispositif de mesure selon la revendication 47, **caractérisé en ce que** la zone de projection (121) en relation avec une face de capteur SPR (120) comprend dix pixels ou moins, de préférence cinq pixels ou moins.

**49.** Dispositif de mesure selon l'une des revendications 46 à 48, **caractérisé en ce que** le paramètre physique est l'angle d'incidence du rayonnement sur les faces de capteur SPR (120) et/ou la longueur d'onde du rayonnement.

**50.** Dispositif de mesure selon l'une des revendications 43 à 49, **caractérisé en ce que** les moyens de rayonnement (405, 410, 420, 425, 430) comprennent des moyens (420, 425) pour former un rayon à rayonnement parallèle pour éclairer la trame des faces de capteur SPR (120), et les moyens de réception (440, 450, 460, 490, 500) comprennent un élément de télescope (440, 450), pour projeter sur le détecteur le rayonnement réfléchi par le dispositif à capteur SPR.

**51.** Dispositif de mesure selon la revendication 50, **caractérisé en ce que** le détecteur présente une surface de réception inclinée par rapport à l'axe optique.

**52.** Dispositif de mesure selon la revendication 51, **caractérisé en ce que** la trame des faces de capteur SPR (120) est à angle droit et présente un plus grand espacement de trame dans une direction que dans la direction perpendiculaire, pour compenser au moins une partie de la distorsion dans la projection (510), produite par le grand angle d'incidence du rayonnement sur la face de capteur.

**53.** Dispositif de mesure selon la revendication 51 ou 52, **caractérisé en ce que** les moyens de réception (440, 450, 460, 490, 500) comprennent une lentille anamorphotique (450), pour compenser au moins une partie de la distorsion, dans la projection (510), produite par l'inclinaison de la face de réception par rapport à l'axe optique.

**54.** Dispositif de mesure selon l'une des revendications 43 à 53, **caractérisé en ce que** le détecteur comprend un élément CCD.

**55.** Procédé d'ajustement d'un dispositif de mesure selon l'une des revendication 38 à 54, **caractérisé en ce que** le dispositif de détection SPR est irradié avec un rayonnement, dans des conditions physiques telles qu'aucun plasmon de surface n'est excité dans les faces de capteur SPR, et à l'aide du contraste entre les faces de capteur SPR (120) et les moyens de séparation (110), les faces de capteur SPR (120) et les moyens de séparation dans les moyens de réception (440, 450, 460, 490, 500) sont différenciés entre eux, pour déterminer une relation entre les faces de capteur et les zones afférentes dans la projection.

**56.** Procédé de mesure faisant utilisation d'un dispositif de mesure selon l'une des revendication 38 à 54, **caractérisé en ce que**
un matériau prédéterminé est appliqué sur la surface, opposée au substrat (10, 20), des faces de capteur SPR (120) du dispositif de détection SPR, au moins un paramètre physique, dont dépendent les conditions physiques, dont dépend la survenance des plasmons de surface dans les surfaces de capteur SPR, est modifié sur une plage de valeurs prédéterminée, pour balayer la zone de la résonance de plasmon de surface et enregistrer un spectre du rayonnement réfléchi, pour chaque surface de capteur SPR, en fonction des paramètres physiques,

des échantillons à mesurer sont placés sur les faces de capteur SPR revêtues du matériau prédéterminé,

le au moins un paramètre physique est de nouveau modifié sur la plage de valeurs prédéterminée, pour de nouveau enregistrer un spectre du rayonnement réfléchi pour chaque surface de capteur SPR, en fonction du paramètre physique, et

le déplacement du point de résonance dans les deux spectres est déterminé pour chaque face de capteur SPR (120), afin de caractériser les échantillons à mesurer.

**57.** Procédé de mesure selon la revendication 56, **caractérisé en ce que** le matériau prédéterminé est placé sur les faces de capteur SPR à l'aide de la technique de spotting.

**58.** Procédé de mesure selon la revendication 57, **caractérisé en ce que** le matériau prédéterminé est une petite molécule organique.

**59.** Procédé de mesure selon l'une des revendications 56 à 58, **caractérisé en ce que** les échantillons à mesurer contiennent des macromolécules biologiques, et un screening à haut débit est effectué.

Fig. 1a

Fig. 1c

Fig. 1b

Fig. 1

Fig. 2a

Fig. 2b

Fig. 2c

Fig. 2

Bild                    Sensorplatte

Fig. 3

Fig. 4a

Fig. 4b

Fig. 4c

Fig. 4

Fig. 5a

Fig. 5b

Fig. 5c

Fig. 5

150

160

100

Fig. 6a

190

170

180

100

Fig. 6b

160

119

10

125

Fig. 6c

Fig. 6

150

20

490

500

Fig. 7

Fig. 8

EP 1 259 796 B1

Fig. 9a

Fig. 9b

Fig. 9

Fig. 10